# EUROPEAN PATENT APPLICATION

(11) **EP 4 287 087 A1**
(43) Date of publication of application: **06.12.2023**
(21) Application number: 22898200.5
(22) Date of filing: 07.09.2022
(51) Int. Cl.: G06Q 10/0631

(54) **INFORMATION COORDINATION SYSTEM FOR HANDLING INFORMATION ON GREENHOUSE GAS EMISSIONS, INFORMATION PROCESSING DEVICE, AND PROGRAM**

(30) Priority: 25.11.2021 JP 2021191405
(71) Applicant: Nomura Research Institute, Ltd., Chiyoda-ku Tokyo 100-0004 (JP)
(72) Inventor: UEMURA, Tetsuji, Tokyo 100-0004 (JP); OKADA, Takuro, Tokyo 100-0004 (JP); ONO, Hisashi, Tokyo 100-0004 (JP); NOMURA, Toshihiro, Tokyo 100-0004 (JP); NITTA, Kazuki, Tokyo 100-0004 (JP)
(74) Representative: Müller-Boré & Partner Patentanwälte PartG mbB
(86) International application number: PCT/JP2022/033561
(87) International publication number: WO 2023/095415

(57) **Abstract**

An embodiment according to the present disclosure is one or more programs for causing a computer to function as each unit of an information coordination system for handling information of greenhouse gas (GHG) emissions, the information coordination system includes a recording unit that records, in a storage, first company activity data that is generated by a first company and relates to GHG emissions directly emitted by the first company, an acquisition unit that acquires a part of second company activity data that is generated by another company, recorded in the storage, and relates to GHG emissions directly emitted by the another company, and a calculation unit that calculates, on the basis of the first company activity data and a part of the second company activity data, GHG emissions directly and indirectly emitted by the first company. The calculation unit calculates GHG emissions directly emitted by the first company on the basis of the first company activity data, and calculates GHG emissions indirectly emitted by the first company on the basis of company activity data related to the first company in the second company activity data.

## Description

### Technical Field

The present invention relates to an information coordination system for handling greenhouse gas emissions, an information processing apparatus, and a program.

### Background Art

Conventionally, there is known a technique that enables evaluation of environmental activities with enhanced transparency and reliable carbon trading by recording carbon emissions of a company in a blockchain (Patent Literature 1 and Patent Literature 2).

Patent Literature 1 discloses a system that enables evaluation of environmental activities of companies by acquiring environmental information such as the amount of fuel used by the activity of each company using a sensor device and recording the information in a distributed ledger. Patent Literature 2 discloses that carbon action-related data of a plurality of subjects (companies) is converted into individual pieces of carbon data (carbon emission reduction amount and carbon emissions) and recorded in a blockchain.

Meanwhile, in the evaluation of greenhouse gas (GHG) emissions, it is desirable to calculate not only direct emissions of a company itself but also emissions (supply chain emissions) obtained by adding up all emissions related to business activities of the company in more detailed units than units of companies, for example, in units of products. Supply chain emissions are the sum of emissions of direct greenhouse gas emissions (Scope 1) of a company itself (such as combustion of fuel), emissions of indirect emissions (Scope 2) associated with the use of electricity, and heat and steam supplied by other companies, and emissions of indirect emissions (Scope 3) other than Scope 1 and Scope 2, which are emissions of other companies related to company activities.

Patent Literature 3 discloses a technique of receiving company activity information including items and details and their costs, and calculating GHG emissions and the like on the basis of the company activity information and boundary information (information in which items or details corresponding to evaluation targets are listed). In Patent Literature 3, the boundary information has a standard as to whether or not a plurality of evaluation indexes such as GHG emissions, CO2 reduction, LCA, and supply chain emission calculation (Scope 1 to 3) correspond to evaluation targets, and thus various emissions of a target company can be evaluated.

### Citation List

### Patent Literature

Patent Literature 1: WO 2020/084700 A
Patent Literature 2: JP 2021-510223 A
Patent Literature 3: Japanese Patent No. 6896315

### Summary of Invention

### Technical Problem

In the technique according to Patent Literature 3, it is not considered that various companies in a supply chain input company activities to a system, and for example, all the necessary company activity information is input by themselves in order to calculate Scope 3 emissions of one's own company. In reality, in a company, information for calculating Scope 3 emissions is transmitted by e-mail, sealed letter, or the like on a company basis, and the transmitted information is input to the system by each company that has received the information.

Receiving and inputting data for calculating emissions from various companies in the supply chain is cumbersome, and reliability may be lowered due to erroneous input or the like. It is also inefficient for each of a plurality of downstream companies to collect and input company activity data of a company located upstream of a supply chain that supplies parts as company activity information for one's own company.

The present invention has been made in view of the above problems, and an object thereof is to achieve a technology capable of facilitating utilization of company activity data of other companies in a supply chain and calculation of GHG emissions including indirect emissions.

### Solution to Problem

To solve this problem, a program of the present invention has the following configuration, for example. That is,
one or more programs for causing a computer to function as each unit of an information coordination system for handling information of greenhouse gas (GHG) emissions, the information coordination system including:
a recording unit that records, in a storage, first company activity data that is generated by a first company and relates to GHG emissions directly emitted by the first company;
an acquisition unit that acquires a part of second company activity data that is generated by another company, recorded in the storage, and relates to GHG emissions directly emitted by the another company; and
a calculation unit that calculates, on the basis of the first company activity data and a part of the second company activity data, GHG emissions directly and indirectly emitted by the first company, wherein
the calculation unit calculates GHG emissions directly emitted by the first company on the basis of the first company activity data, and calculates GHG emissions indirectly emitted by the first company on the basis of company activity data related to the first company in the second company activity data.

### Advantageous Effects of Invention

According to the present invention, it is possible to facilitate utilization of the company activity data of other companies in a supply chain and calculation of the GHG emissions including the indirect emissions.

Other features and advantages of the invention will become apparent from the following description with reference to the accompanying drawings. Moreover, in the accompanying drawings, the same or similar configurations are denoted by the same reference numerals.

### Brief Description of Drawings

The accompanying drawings are included in the specification, constitute a part thereof, illustrate embodiments of the present invention, and are used together with the description to explain the principle of the present invention.
Fig. 1 is a diagram for explaining an outline of an information coordination system according to an embodiment of the present invention.
Fig. 2 is a diagram schematically illustrating a concept of emission calculation by the system of the present embodiment.
Fig. 3A is a block diagram illustrating a functional configuration example of an edge node and a blockchain node according to the present embodiment.
Fig. 3B is a diagram illustrating a hardware configuration of the edge node according to the present embodiment.
Fig. 4 is a diagram illustrating a logical module configuration example implemented in the system according to the present embodiment.
Fig. 5A is a diagram (1) illustrating processing implemented in the system according to the present embodiment and data elements.
Fig. 5B is a diagram (2) illustrating the processing implemented in the system according to the present embodiment and the data elements.
Fig. 5C is a diagram (3) illustrating the processing implemented in the system according to the present embodiment and the data elements.
Fig. 6A is a diagram (1) schematically illustrating an operation related to data transmission and reception in the system according to the present embodiment.
Fig. 6B is a diagram (2) schematically illustrating the operation related to data transmission and reception in the system according to the present embodiment.
Fig. 7 is a diagram illustrating an example of a login screen according to the present embodiment.
Fig. 8 is a diagram illustrating an example of a reception list screen according to the present embodiment.
Fig. 9 is a diagram illustrating an example of a transmission list screen according to the present embodiment.
Fig. 10 is a diagram illustrating an example of a new edit screen according to the present embodiment.
Fig. 11 is a diagram illustrating an example of a dialog for designating a transmission destination of company activity data according to the present embodiment.
Fig. 12A is a diagram (1) illustrating an example of tracing and expanding the company activity data according to the present embodiment.
Fig. 12B is a diagram (2) illustrating an example of tracing and expanding the company activity data according to the present embodiment.
Fig. 13 is a diagram for explaining coefficients according to the present embodiment.
Fig. 14A is a diagram for explaining the coefficients according to the present embodiment in detail.
Fig. 14B is a diagram for explaining the coefficients according to the present embodiment in detail.
Fig. 15 is a diagram illustrating an example of a bill of materials according to the present embodiment.
Fig. 16A is a diagram (1) schematically illustrating a flow of registering the bill of materials according to the present embodiment.
Fig. 16B is a diagram (2) schematically illustrating the flow of registering the bill of materials according to the present embodiment.
Fig. 17 is a diagram for explaining processing using coefficients according to the present embodiment.
Fig. 18 is a diagram illustrating an example of a user interface for starting intra-entity coordination processing according to the present embodiment.
Fig. 19A is a diagram (1) illustrating an example of generating a calculation result such as GHG emissions for a shipping quantity of products according to the present embodiment.
Fig. 19B is a diagram (2) illustrating an example of generating a calculation result such as GHG emissions for a shipping quantity of products according to the present embodiment.
Fig. 20 is a diagram schematically illustrating an example of a certificate registration screen according to the present embodiment.
Fig. 21A is a diagram (1) illustrating an example of processing after certificate registration according to the present embodiment.
Fig. 21B is a diagram (2) illustrating an example of the processing after certificate registration according to the present embodiment.
Fig. 22A is a diagram (1) illustrating an example of accepting certificate information according to the present embodiment.
Fig. 22B is a diagram (2) illustrating an example of accepting the certificate information according to the present embodiment.
Fig. 23A is a diagram (1) illustrating an example of a method of searching for and checking a certificate according to the present embodiment.
Fig. 23B is a diagram (2) illustrating an example of the method of searching for and checking a certificate according to the present embodiment.
Fig. 24A is a diagram (1) schematically illustrating manufactured product parts list-coordination ID association processing according to the present embodiment.
Fig. 24B is a diagram (2) schematically illustrating the manufactured product parts list-coordination ID association processing according to the present embodiment.
Fig. 24C is a diagram (3) schematically illustrating the manufactured product parts list-coordination ID association processing according to the present embodiment.
Fig. 25A is a diagram (1) for explaining conversion processing using coefficients according to the present embodiment.
Fig. 25B is a diagram (2) for explaining the conversion processing using coefficients according to the present embodiment.
Fig. 25C is a diagram (3) for explaining the conversion processing using coefficients according to the present embodiment.
Fig. 26 is a diagram for explaining processing of reconfiguring a conversion coefficient DB according to the present embodiment.
Fig. 27A is a diagram (1) schematically illustrating SCOPE 1 unoffset assignment processing according to the present embodiment.
Fig. 27B is a diagram (2) schematically illustrating the SCOPE 1 unoffset assignment processing according to the present embodiment.
Fig. 27C is a diagram (3) schematically illustrating the SCOPE 1 unoffset assignment processing according to the present embodiment.
Fig. 28A is a diagram (1) for explaining correctness proof addition processing according to the present embodiment.
Fig. 28B is a diagram (2) for explaining the correctness proof addition processing according to the present embodiment.
Fig. 28C is a diagram (3) for explaining correctness proof addition processing according to the present embodiment.
Fig. 29 is a diagram for explaining a series of operations in an information coordination system for an input support function according to the present embodiment.
Fig. 30 is a diagram illustrating an example of a request user interface in the input support function according to the present embodiment.
Fig. 31A is a diagram for explaining parts sharing according to the present embodiment.
Fig. 31B is a diagram for explaining parts sharing according to the present embodiment.
Fig. 32 is a diagram illustrating an example of a user interface used in a parts sharing function according to the present embodiment.

### DETAILED DESCRIPTION

Embodiments will be described in detail below with reference to the accompanying drawings. Note that the following embodiments do not limit the invention according to the claims, and all combinations of features described in the embodiments are not necessarily essential to the invention. Two or more features of the plurality of features described in the embodiments may be arbitrarily combined. In addition, the same or similar configurations are denoted by the same reference numerals, and redundant description will be omitted.

### <Outline of Information Coordination System>

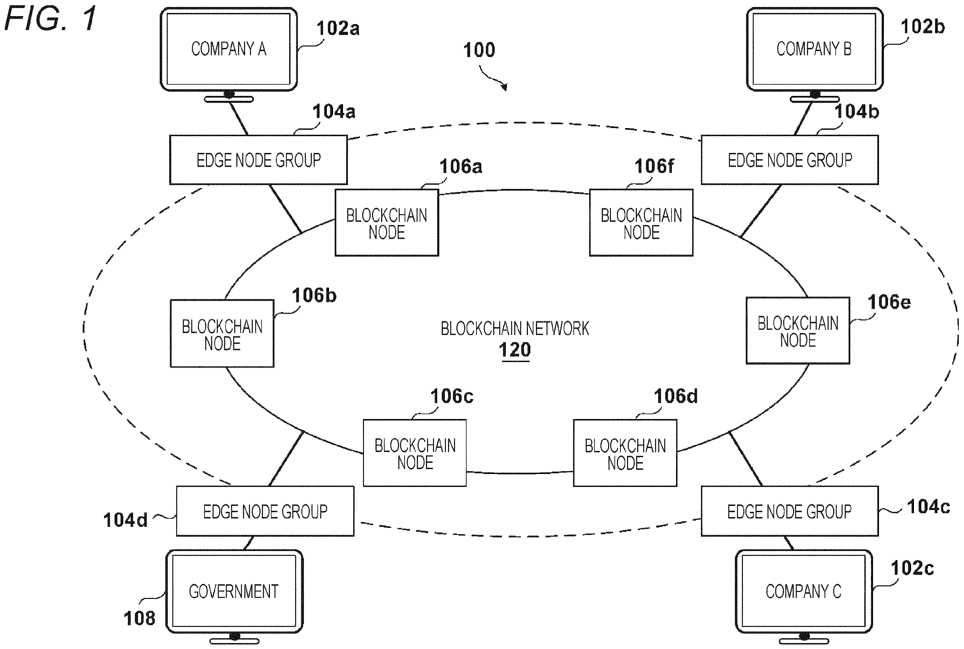

An example of an information coordination system according to the present embodiment will be described with reference to Fig. 1. The information coordination system according to the present embodiment is a system for sharing company activity data among a plurality of companies and accurately calculating GHG emissions of each company. In this system, for example, it is possible to grasp highly accurate emissions close to actual measured values, as compared with Scope 3 emissions calculated on the basis of a conventional activity amount on a company basis and an emission source. In addition, since the company activity data is coordinated from upstream to downstream in a supply chain, it is possible to more easily grasp a situation such as where and how much GHG is emitted in the supply chain or how much offset is taken. Details will be described below.

In an information coordination system 100, terminals (102a, 102b,... 102n) used in a plurality of companies each access a corresponding edge node group (104a, 104b,... 104n), refer to company activity data of other companies recorded in a blockchain, and record the company activity data of one's own company in the blockchain (further via a blockchain node). Note that, when the terminals of the companies are not distinguished, they are simply referred to as "terminal 102". In addition, the edge node group can include one or more edge nodes, but in the following description, for the sake of simplicity, a case where there is one edge node will be described as an example. Then, when the edge node groups and the blockchain nodes are not distinguished, they are simply referred to as "edge node 104" and "blockchain node 106", respectively.

The company using the terminal 102 is a company having business activities. For example, in a case when a company (company A) using the terminal 102a is a subject of calculation of GHG emissions, the companies using the terminals 102b to 102n include companies involved in any GHG emissions related to the business activities of the company A.

The edge node 104 operates an application that enables each company to operate to transmit and receive company activity data shared in the blockchain to and from other companies. The company activity data of the company is recorded in a blockchain of a blockchain network 120 as a transaction. Note that, in the following description, the company activity data is also simply referred to as "transaction data" in order to simplify the description. The government can use a terminal 108 to read necessary company activity data via the edge node 104 connected to the blockchain network 120 and use the data for creating, for example, government statistics.

The company activity data recorded in the blockchain network 120 includes, for example, a carbon footprint (GHG emissions) and energy consumption other than GHG for each specific product. In addition, the company activity data includes information of a carbon sink credit and an environmental value for each specific product, which indicate the reduction amount and absorption amount of GHG emissions. The environmental value information is information indicating a generation source of renewable energy, and may include, for example, non-fossil value information. The information of the carbon sink credit and the environmental value does not need to be the information itself of the certificate that supports the carbon sink credit and the environmental value and the GHG emissions protocol compliance certificate, but may be a reference to these certificates. By integrally handling not only the GHG emissions and the energy consumption other than GHG, but also the information of the credits and the environmental value as company activity data, it is possible to trace the total emission record including the reduction record of the GHG emissions and the energy consumption in the company.

The company activity data can be recorded and referred to at various granularities, but it is desirable that the company activity data is data from which emissions and the activity amount specific to a product can be obtained as much as possible. The granularity of the data may be, for example, (1) company level data, (2) business unit level data, (3) facility level data, (4) activity level, process level or manufacturing line level, (5) product level data, or the like. The company level data is data of the GHG emissions and/or activity amount of the entire company, and is coarse data. The business unit level data is data of the GHG emissions and/or activity amount in units of business that manufactures products. The facility level data is data of the GHG emissions and/or activity amount of a facility or business that manufactures products. The activity level, process level, or manufacturing line level data is data of the GHG emissions and/or activity amount involved in an activity, process, or manufacturing line that manufactures products. The product level data is data of the GHG emissions from raw material extraction to a gate. In the present embodiment, by creating the company activity data on a product basis with a finer granularity than a company basis, it is possible to grasp highly accurate emissions close to actual measured values.

The company activity data can be traced on a product basis, and thus various levels of emissions can be provided to the outside. By adding up information of the company activity data on a product basis, the present system can provide emissions at an arbitrary level such as on a facility basis, a business basis, or a company basis.

In addition, by recording the company activity data in the blockchain, it is possible to make it difficult to falsify the company activity data. That is, it is possible to ensure the reliability of the company activity data transmitted via the blockchain.

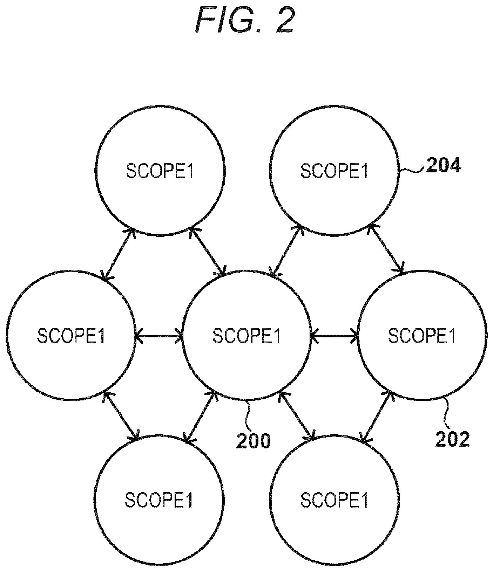

Fig. 2 schematically illustrates a concept of emission calculation by the present information coordination system 100. The image shown in Fig. 2 illustrates a state where each of companies 200, 202, and 204 generates company activity data for calculating Scope 1 emissions of one's own company, and the company activity data is mutually connected and available to other companies. For example, the company 200 can refer to a part of data related to the company 200 in company activity data of the companies 202 and 204, and calculate up to Scope 3 emissions (for example, emissions related to transportation of parts and disposal of products). Each company can input data with fine granularity such as a business unit level, a facility level, or a product level (the barrier is low) if it is the company activity data of one's own company. Therefore, if another company can refer to and use the relevant part of the company activity data, the accuracy of calculation of emissions other than Scope 1 can be improved. That is, as compared with a case where each company calculates rough Scope 3 emissions by multiplying the activity amount on a company basis by an emission intensity in a conventional method, it is possible to reduce the trouble of calculating the emissions and to improve the accuracy of the emissions calculated.

### <Functional Configuration Example of Edge Node and Blockchain Node>

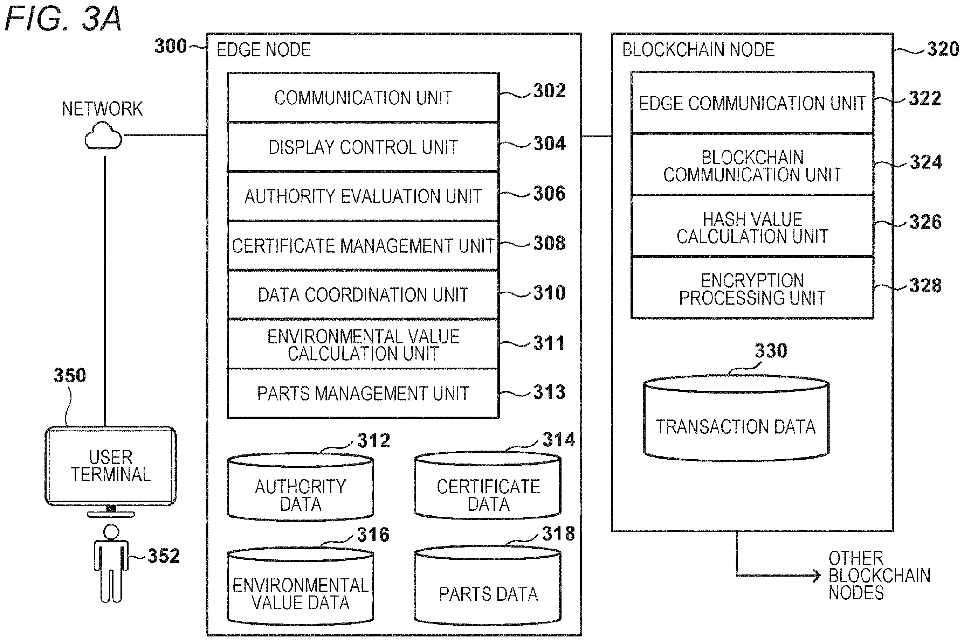

Next, a functional configuration example of an edge node and a blockchain node will be described with reference to Fig. 3A. Each of the edge node and the blockchain node is an example of an information processing apparatus. Each block illustrated here can be implemented by a device such as a CPU of a computer, a circuit, or a mechanical device in terms of hardware, and can be implemented by a computer program or the like in terms of software. Functional blocks as illustrated herein are implemented by coordination thereof. Therefore, these functional blocks can be implemented in various forms by a combination of hardware and software. In addition, each data shown here is temporarily or permanently stored in a memory or a storage to be described later.

In the present embodiment, a blockchain node 320 connected to the blockchain network 120 and an edge node 300 that operates an application operate in cooperation. The edge node 300 provides, for example, screen information to be described later to a user terminal 350 used by a user 352 in a company, and implements functions of a plurality of modules such as an inter-entity information transmission module to be described later. The edge node 300 and the blockchain node 320 correspond to the edge node 104 and the blockchain node 106 described above, respectively. Furthermore, the user terminal 350 corresponds to the terminal 102 in the company. Note that the functional configuration example illustrated in Fig. 3A is not limited thereto. For example, any of the components constituting the edge node 300 may operate on a third node (for example, any data in the edge node 300 may be held in the third node). Furthermore, in the example of Fig. 3A, a case where the edge node 300 and the blockchain node 320 are separate nodes is illustrated, but these may be integrated.

The edge node 300 includes, for example, a communication unit 302, a display control unit 304, an authority evaluation unit 306, a certificate management unit 308, a data coordination unit 310, an environmental value calculation unit 311, a parts management unit 313, authority data 312, certificate data 314, environmental value data 316, and parts data 318. Meanwhile, the blockchain node 320 includes, for example, an edge communication unit 322, a blockchain communication unit 324, a hash value calculation unit 326, an encryption processing unit 328, and transaction data 330.

The communication unit 302 of the edge node 300 communicates with the user terminal 350 and the blockchain node 320 via a network. The communication unit 302 transmits display data generated by the display control unit 304 to the user terminal 350, and receives input data transmitted from the user terminal 350. The received input data is provided to the evaluation data coordination unit 310, the environmental value calculation unit 311, or the like. Furthermore, in response to an instruction from the data coordination unit 310 or the like, the communication unit 302 communicates with the blockchain node 320 to transmit data to be written as transaction data or receive the read transaction data.

The display control unit 304 generates display data to be displayed on the user terminal 350. In order to generate the display data, the display control unit 304 converts the transaction data into the display data and structures the display data as screen elements.

The authority evaluation unit 306 determines whether the request for the transaction data is valid on the basis of the authority data 312. For example, the authority evaluation unit 306 checks whether the data of a destination and a sender stored in the transaction data matches the authority data. In addition, in a case where an audit destination is set in the transaction data, the authority evaluation unit 306 determines that the transaction data is valid only in a case where the user is an auditor. The authority data 312 may include identification information of a user or a company having an authority to access the transaction data, the content of each authority, and the like. The certificate data 314 includes certificate data related to credits. The certificate data 314 may function as a certificate DB to be described later.

The certificate management unit 308 stores and reads the certificate data 314 with respect to the hash value of the required certificate. The data coordination unit 310 performs association between transaction data. In addition, the data coordination unit 310 generates transaction data from parts data read by the parts management unit 313. At this time, the data coordination unit 310 calculates coefficients for calculating emissions and an environmental value from the relationship between the associated transaction data and the part, thereby setting the emissions and the environmental value of the transaction data. When generating a transaction, the data coordination unit 310 may cause the communication unit 302 to transmit the transaction data in order to cause the blockchain node 320 to record the transaction data. When the certificate is stored, the environmental value calculation unit 311 calculates data described in the certificate as an environmental value balance and records the calculated environmental value balance in the environmental value data 316. Furthermore, in a case where the environmental value data is used in the transaction data, the environment value balance is erased. The parts management unit 313 associates product data of a company with components thereof, and holds the product data as the parts data 318. The parts management unit 313 reads parts data in response to a request from the data coordination unit 310.

Note that, in the present embodiment, the certificate data 314 and the environmental value data 316 may be provided separately from a blockchain that stores transaction data. A reference to certificates is recorded in transaction data (company activity data), and entity data of the certificates is stored in a storage different from the blockchain and read from the storage. As a result, the load on the blockchain node 320 and the load at the time of receiving transaction data can be reduced.

The blockchain node 320 records transaction data (that is, company activity data) received from the edge node 300 in the blockchain or reads the transaction data from the blockchain. That is, the blockchain node 320 can function as a means for recording company activity data by operation of each unit. The edge communication unit 322 communicates with the edge node 300 to receive a request to add transaction data, and transmits transaction data in response to a request to acquire transaction data from the edge node 300.

The blockchain communication unit 324 is connected to other blockchain nodes constituting the blockchain network 120 via a network, and performs synchronization of transaction data and transmission and reception of hash values.

The hash value calculation unit 326 is periodically activated to calculate a hash value for a request to add a blockchain. The calculation is started simultaneously in synchronization with other blockchain nodes. This hash value is repeated until a specific solution is obtained, and when the solution is obtained, it is declared to other blockchain nodes, and the calculation in all the blockchain nodes ends. Since the calculation is set to be completed within a certain time, the calculation is reliably completed before the next activation.

The encryption processing unit 328 encrypts the transaction data, the hash value, and the hash value of the immediately preceding transaction data in response to the request to add the transaction data, and complements the transaction data. In addition, the encryption processing unit 328 decrypts the transaction data in response to a request to acquire transaction data, and acquires data under specific conditions. The transaction data 330 includes company activity data of a company a related to GHG emissions directly emitted by the company a and company activity data of a company b related to GHG emissions directly emitted by the company b. As described above, the company activity data includes information of the GHG emissions, the energy consumption other than GHG, the carbon sink credit, and the environmental value. The transaction data 330 is recorded in the blockchain and is held in a distributed manner in a plurality of blockchain nodes 320. A more specific example of the company activity data will be described later.

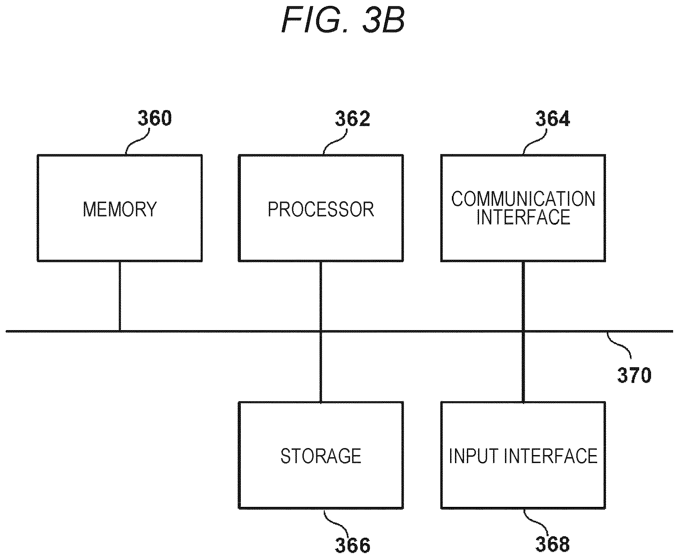

A hardware configuration of the edge node 300 will be described with reference to Fig. 3B. The edge node 300 includes a memory 360, a processor 362, a communication interface 364, a storage 366, and an input interface 368. These components are each connected to a bus 370 and communicate with one another via the bus 370.

The memory 360 is a volatile storage medium for temporarily storing data and programs. In addition, the storage 366 is a non-volatile storage medium that permanently stores data and programs. The storage 366 also stores the data described in the functional configuration example. The processor 362 implements various functions of the edge node 300 by loading a program stored in the storage 366 to the memory 360 and executing the program. The communication interface 364 is an interface for transmitting and receiving data to and from the outside of the edge node 300. The communication interface 364 is connected to a network and exchanges data with the user terminal 350 and the blockchain node 320 via the network. The input interface 368 is, for example, a device for receiving an input from an administrator of the edge node 300, but does not need to be provided.

Furthermore, the hardware configuration of the blockchain node 320 may be similar to the hardware configuration described for the edge node 300. Note that the storage 366 of the blockchain node 320 stores a blockchain including the transaction data 330 described above.

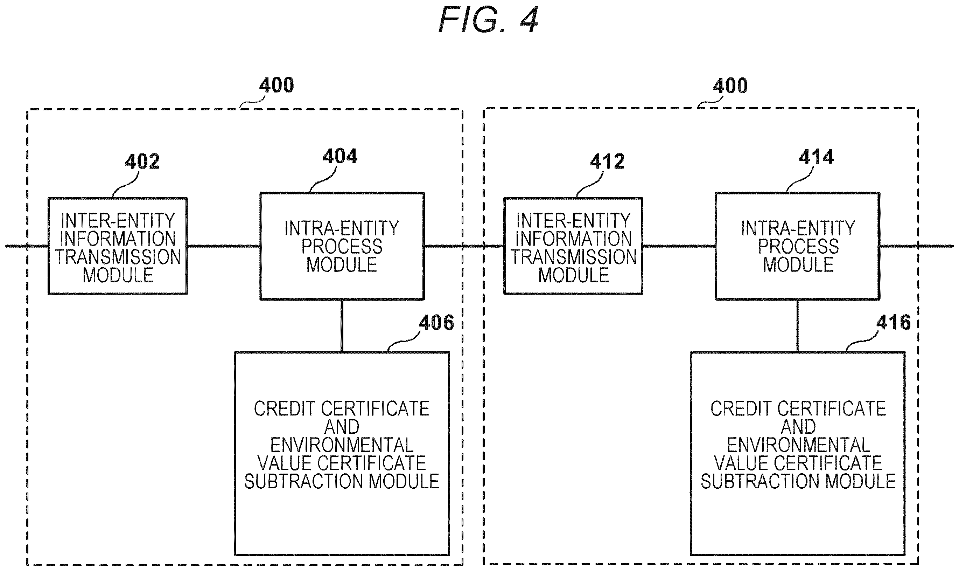

In addition, a logical module configuration example implemented in the information coordination system 100 will be described with reference to Fig. 4. In the present embodiment, the transmission of company activity data is divided into transmission between entity companies (simply referred to as "entities") and transmission within an entity. The information coordination system 100 includes an inter-entity information transmission module 402, an intra-entity process module 404, and a credit certificate and environmental value certificate subtraction module 406. The logical module illustrated in Fig. 4 is implemented by coordination of the individual units in the node illustrated in Fig. 3A. That is, it is implemented by the coordination of a device including a CPU of a computer, a circuit, a mechanical device, a computer program, and the like. Note that the modules 402, 404, and 406 are similar to the modules 412, 414, and 416, respectively.

The inter-entity information transmission module 402 is a module for coordinating data of the individual companies and sharing company activity data among specific companies from upstream to downstream in a supply chain. A frame 400 indicated by a broken line schematically indicates a range of a module configuration implemented by a specific edge node 104 (via a blockchain node). Note that, in Fig. 4, a line connecting the modules indicates a blockchain to which the modules are connected. In the example illustrated in Fig. 4, for example, the inter-entity information transmission module 402 and the inter-entity information transmission module 412 are connected by a blockchain, and the intra-entity process module 404 and the intra-entity process module 414 can also write data in the blockchain and read data from the blockchain.

The intra-entity process module 404 is a module that calculates GHG emissions of one's own company using a relevant part of company activity data of other companies. The intra-entity process module 404 can calculate GHG emissions of a product on the basis of, for example, GHG emissions related to a purchased part and a coefficient representing the relationship between the purchased part and the product. The credit certificate and environmental value certificate subtraction module 406 is a module that divides an offset based on a credit certificate or an environmental value certificate into a quantity on a product basis and assigns the divided offset to each product.

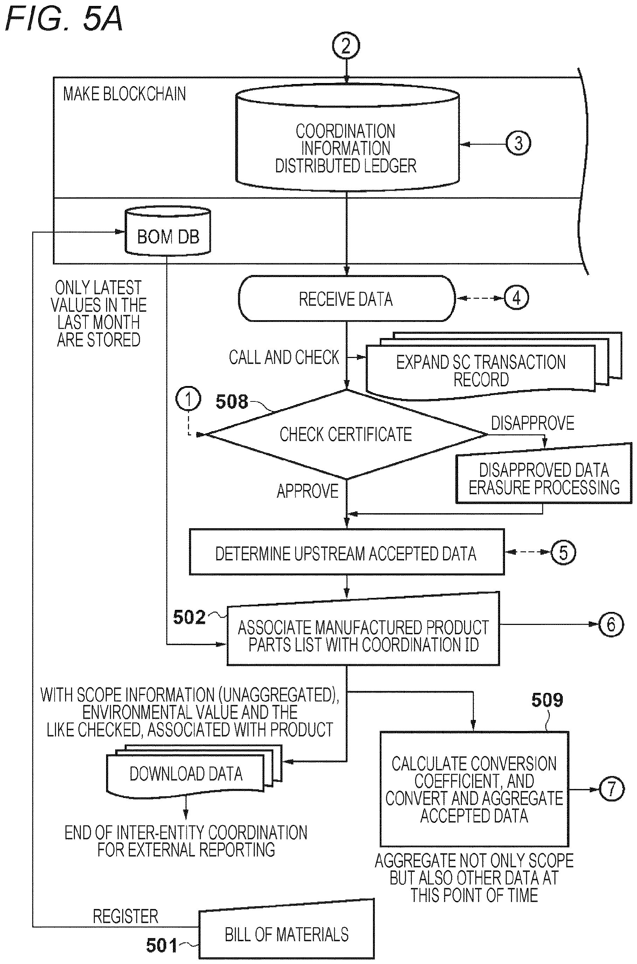

Figs. 5A to 5C illustrate detailed processing implemented in the data coordination system 100 and data elements. The processing is implemented by any of the inter-entity information transmission module 402, the intra-entity process module 404, and the credit certificate and environmental value certificate subtraction module 406. Each processing of each of Figs. 5A to 5C will be described with reference to the following description of each module as appropriate.

Hereinafter, processing by the inter-entity information transmission module 402, the intra-entity process module 404, and the credit certificate and environmental value certificate subtraction module 406, and coordination processing between these modules will be described. Note that, in the following description, in order to avoid complicated description, the modules 402, 404, and 406 or the edge node 300 is assumed to be a processing subject. Reading and writing the blockchain data is performed by the blockchain node 320, but other processing is implemented by a processor of the edge node 300 executing a program to function each functional block, unless otherwise specified. In addition, an example in which various display data are displayed will be described in the following description, but unless otherwise specified, the screen related to the description is transmitted from the edge node 300 to the user terminal 350 and displayed on the user terminal 350. Furthermore, the input received from the user is transmitted from the user terminal 350 and processed by the edge node 300.

### transmission and Reception of Company Activity Data by Inter-Entity Information Transmission Module>

The inter-entity information transmission module 402 shares data via a blockchain among specific companies in a supply chain. The data to be shared only among specific companies may or may not be encrypted. In the present embodiment, processing of sharing data with a specific company via a blockchain is referred to as "data transmission and reception processing". As a result, the users of individual companies can share the company activity data among the companies with an easy operational feeling such as transmission and reception of mails.

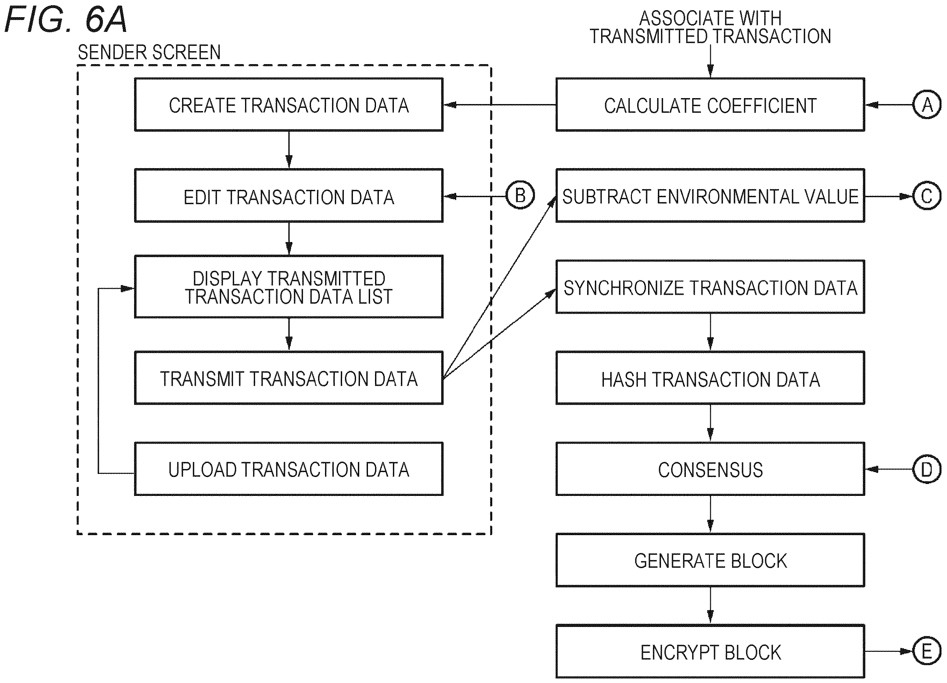

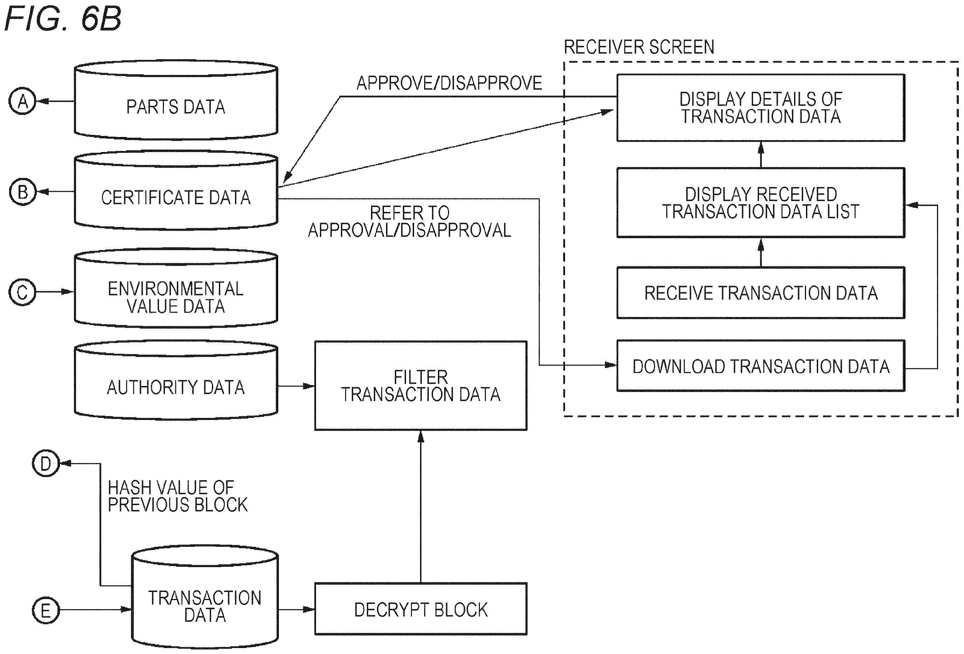

Figs. 6A and 6B schematically illustrate a state where data is transmitted and received between a transmitting company and a receiving company via a blockchain. As a sender screen on a transmission side, a screen for performing various operations such as generation and display of transaction data (company activity data) is displayed. The sender screen may include, for example, a screen for generating transaction data, a screen for editing transaction data, a screen for displaying a list of transaction data transmitted in the past, a screen for transmitting transaction data, and the like. In addition, the sender screen may include, for example, a transaction upload screen for uploading data in a company related to a transaction recorded in CSV format or the like to the system. Although details will be described later, in a case where transaction data to be transmitted is data related to a product, the transaction data is generated on the basis of transaction data related to parts and coefficients (for example, obtained from the number of necessary parts and the quantity of purchased parts and the like).

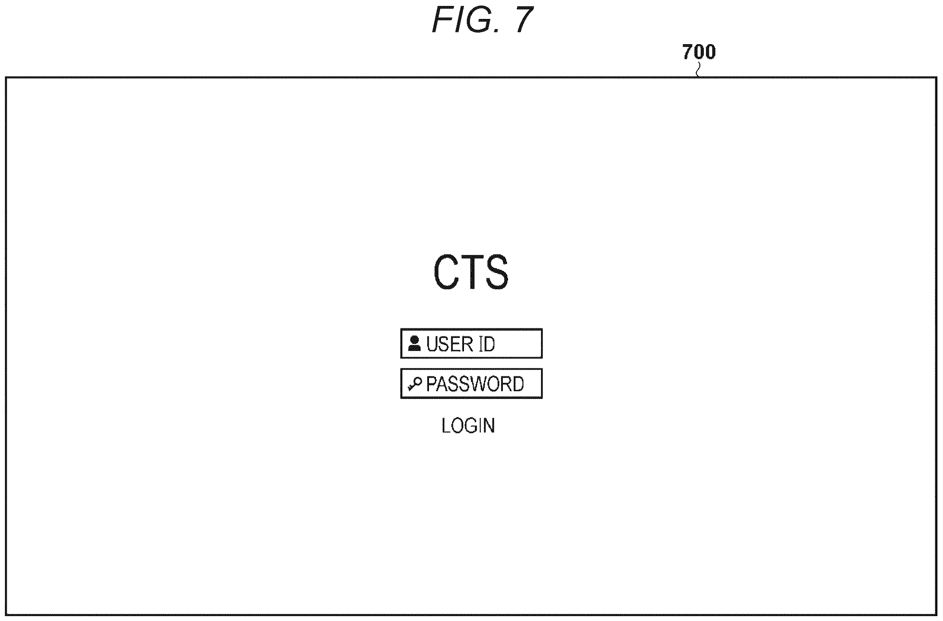

Note that an example of a screen related to transmission and reception of transaction data (company activity data) will be schematically described here, and a specific example will be separately described later with reference to Figs. 7 to 12. Both examples include common elements and additional or alternative elements with respect to display elements and display transitions, but the present invention includes all of them and is not further limited thereto.

In the present information coordination system, a user can add new transaction data or edit transaction data. As the display of a transmitted transaction data list, a list of transaction data currently being edited may be displayed. In a case where the list of the transaction data being edited is displayed, when the user performs an operation of adding a transaction, a screen for adding one transaction data may be displayed. When the transaction data is added, information for identifying a business (for example, a company name, a business code, a securities code, a company code, and the like) may be input as a destination, or a transmission destination may be searched for by the input. The business code may be, for example, a GS1 business code, and the company code may be, for example, a TDB company code. As an example, a barcode for reading a coordination ID to be described later may be displayed on a screen for adding a transaction.

When the transaction data is edited, for example, various types of data such as information related to a credit certificate and an environmental value certificate included in the transaction data may be editable. When the user designates the information of the credit certificate or the environmental value certificate in the transaction data by pressing or the like at the time of editing the transaction data, the edge node may newly display a screen (certificate selection screen) for selecting a certificate. On the certificate selection screen, the user may, for example, select data of the credit certificate or the environmental value certificate recorded in the certificate data and associate the data of the selected data with target transaction data. On the certificate selection screen, a desired certificate may be searchable by inputting a serial number. On the screen of the list of the transaction data being edited, transaction data recorded in advance in a file may be collectively fetched. After adding or editing the transaction data, the user can transmit the transaction data to a desired transmission destination, for example, by operating a send button.

When the transaction data is transmitted, a series of processing of recording a transaction in a blockchain is performed (by a blockchain node). The recording of the transaction in the blockchain may be known general blockchain processing. For example, processing such as hashing or consensus processing of the transaction data is performed, and the transmitted transaction data is stored in the blockchain. At this time, some transactions are blocked and stored in the blockchain.

In addition, when the transaction data is transmitted, a result of processing by a credit certificate and environmental value certificate subtraction module to be described later may be stored in the environmental value data. The transaction data transmitted in the past can be displayed on a transmitted transaction data list display screen. Each transaction data may be displayed based on a timestamp (for example, in order of newest to oldest).

A receiver screen is displayed, for example, on the user terminal 350 of the receiving company. The receiver screen includes a screen for performing various operations such as displaying a list of transaction data (company activity data) transmitted (stored) by another company and displaying details of the transaction data. For example, when a received transaction data list display screen is displayed, the transaction data may be received. In the transaction data stored in the blockchain, data browsable by the user is filtered based on authority data (that is, an access authority to data) and received. In the display of a received transaction data list, for example, a list of the transactions received in the past can be displayed. At this time, the transaction data may be displayed based on a time stamp of the blockchain (for example, in order of newest to oldest). In addition, by pressing a display button (for example, a download button) in the display of the received transaction data list, the displayed transaction data may be downloaded in a predetermined format (for example, CSV). As a mode of the transaction data list, for example, when specific transaction data is selected, upstream transaction data (for example, transaction data of parts) may be further displayed on the same screen. In another mode of the transaction data list, by pressing a display button such as an expand button, an upstream transaction may be displayed on another screen. In a case where the upstream transaction data is further displayed on the same screen, the hierarchy of the transaction data is preferably visually indicated so that the hierarchical structure of the transaction data can be easily grasped.

In response to selection of specific transaction data in the display of the transaction data list, a transaction data detail display screen may be displayed. The transaction data detail display screen displays various types of information included in the transaction data. On the transaction data detail display screen, the user may set whether to approve or disapprove the certificate associated with the transaction data. Alternatively, as another embodiment, the user may set whether to approve or disapprove the certificate on another screen, such as a certificate check screen to be described later, different from the transaction data detail display screen. In a case where it is set to disapprove the certificate, information of the disapproved certificate may not be included when the transaction data is downloaded.

Furthermore, a specific example of screen display related to transmission and reception of company activity data will be described with reference to Figs. 7 to 12. Note that the display data illustrated as a screen display example is generated by the display control unit 304 using, for example, results of processing of the data coordination unit 310, the certificate management unit 308, the environmental value calculation unit 311, and the like.

Fig. 7 illustrates a login screen 700 for logging in to a service (CTS: CabonTraceService) provided by the information coordination system 100. The login screen 700 receives a user ID and a password of the user 352 of the company B. Biometric authentication may be performed instead of inputting a password.

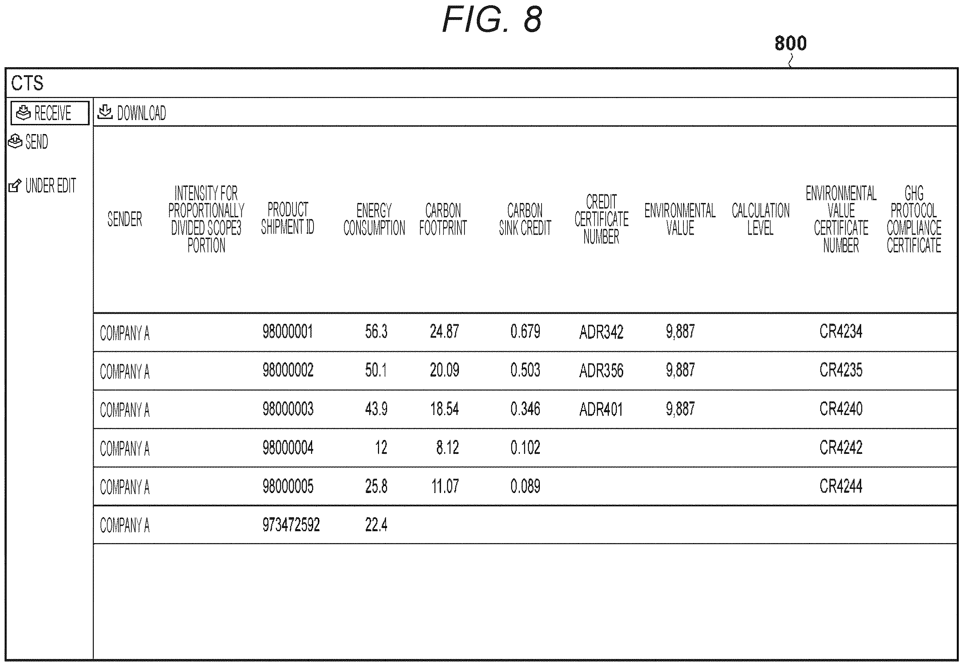

Fig. 8 illustrates, for example, a reception list screen 800 for displaying a list of company activity data received from the company A in the user terminal of the company B. On the left side of the screen, for example, "receive", "send", "under edit", and the like are displayed as the main menu. "Receive" is an element for displaying the reception list screen 800, and "send" is a transmission list screen 900 to be described later. "Under edit" is an element for displaying a list of items being edited. In addition to these elements, other elements for the user to quickly access desired information, such as "certificate" for accessing certificate information and "parts" for displaying parts information, may be arranged in the main menu. Furthermore, the display may be switched based on the displayed information, or other elements such as "intra-entity coordination" to be described later may be displayed.

The company activity data displayed on the reception list screen 800 includes an identifier indicating a specific product, and a carbon footprint (GHG emissions), energy consumption amount other than GHG emissions, a carbon sink credit (and a certificate number thereof), and an environmental value (and a certificate number thereof) corresponding to the product. When a download button is pressed, data of the displayed transaction can be downloaded as a file in CSV format, for example.

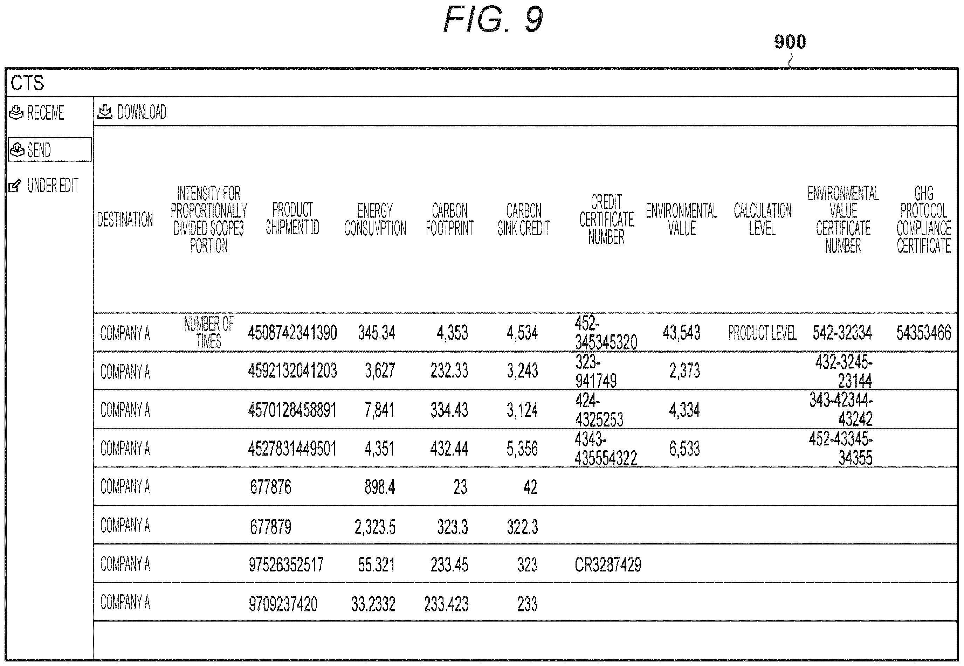

Fig. 9 illustrates, for example, the transmission list screen 900 for displaying a list of company activity data transmitted to the company A in the user terminal of the company B. Similarly to Fig. 8, the displayed company activity data includes an identifier indicating a specific product, and a carbon footprint (GHG emissions), energy consumption other than GHG emissions, a carbon sink credit (and a certificate number thereof), and an environmental value (and a certificate number thereof) corresponding to the product.

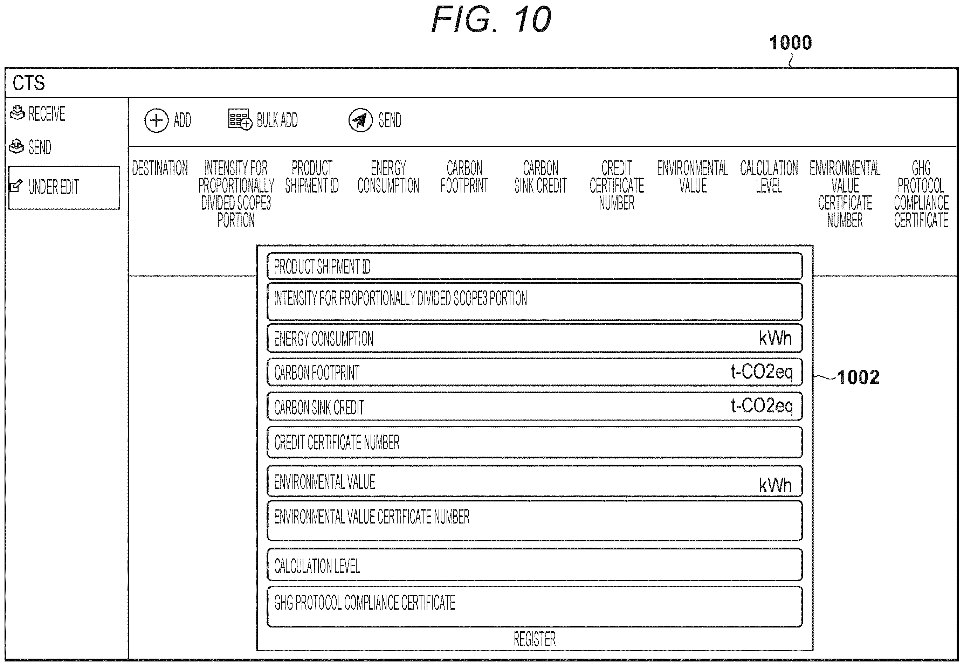

Fig. 10 illustrates an example of a new edit screen 1002 for adding a new transaction in the user terminal of the company B, for example. On the new edit screen 1002, fields for inputting items of a piece of company activity data are displayed. The input company activity data is registered in response to pressing of a register button. Note that the example illustrated in Fig. 10 shows an example of registering a piece of company activity data. However, for example, in a case where a plurality of pieces of company activity data is input in advance in a CSV file or the like, the plurality of pieces of company activity data may be collectively registered by designating the CSV file.

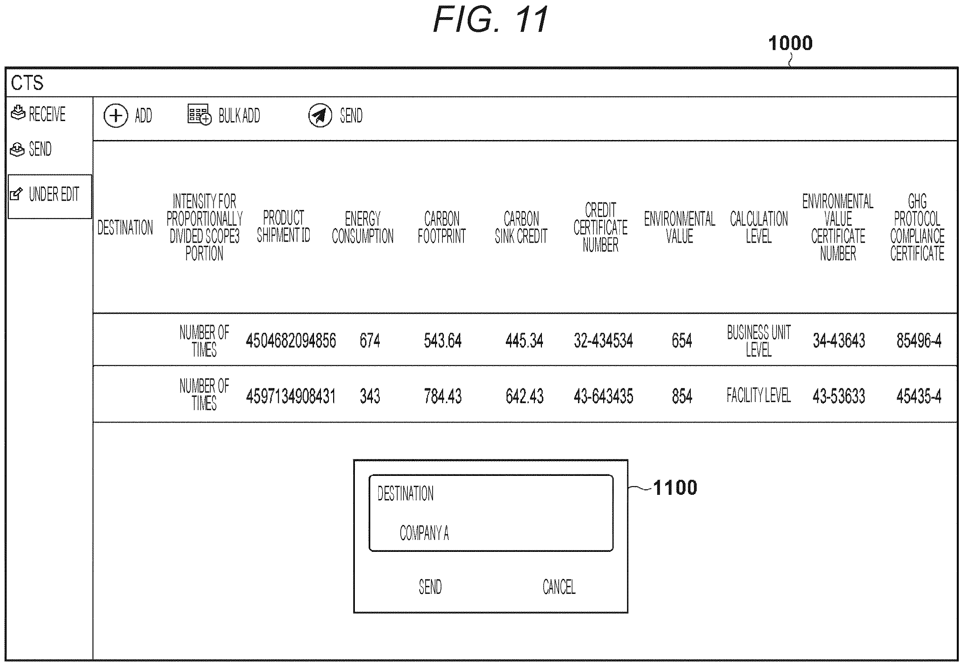

Fig. 11 illustrates an example of a dialog 1100 for designating a transmission destination of company activity data after the data is registered. The destination as the transmission destination can be set by inputting or searching for a company name, a company code, or the like. When the send button of the dialog 1100 is pressed, the edge node 300 transmits the registered company activity data to the blockchain network (via the blockchain node 320). When the transaction data is recorded in the blockchain through consensus processing or the like, the record of the transaction data is notified to the company B as a sender and the company A as a receiver.

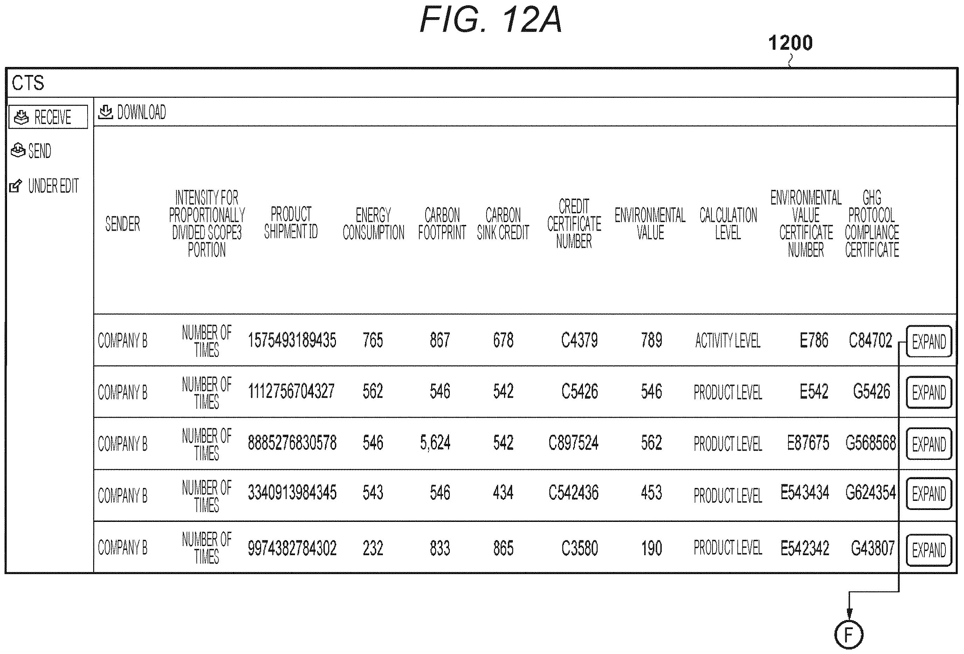

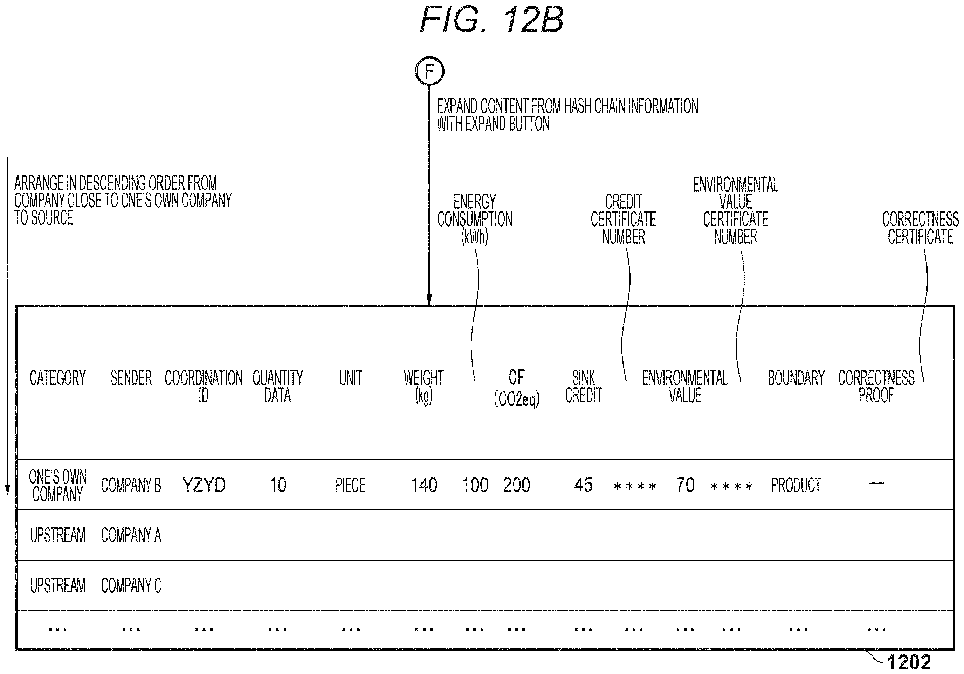

Figs. 12A and 12B illustrate an example in which the company activity data displayed on the reception list screen is expanded by tracing the company activity data on the upstream side of the supply chain. In this example, a state where data received from the company B is expanded on the reception list screen of the company D is illustrated, for example. The blockchain node 320 acquires the company activity data (stored in the blockchain in advance) of the company A and the company C that are upstream of the company B from related information between transaction data stored in the transaction data. The acquired company activity data is displayed as display data via the display control unit 304 of the edge node 300.

For example, in a case where the company B purchases a part from the company A to manufacture a product, the company activity data received from the company A includes the company activity data related to the part. That is, it includes GHG emissions directly emitted by the company A for the part of the company A, energy consumption other than GHG, a carbon sink credit, and an environmental value. In addition, the company activity data transmitted by the company B includes GHG emissions directly emitted by the company B for the product, energy consumption other than GHG, a carbon sink credit, and an environmental value.

Note that the processing by the inter-entity information transmission module 402 corresponds to the processing of receiving data from coordination information in a distributed ledger and expanding a SC transaction record and the processing of writing company activity data in the blockchain by making an inter-entity coordination BC from data transmission in the example illustrated in Figs. 5A to 5C.

### <Processing of Generating Company Activity Data by Intra-Entity Process Module >

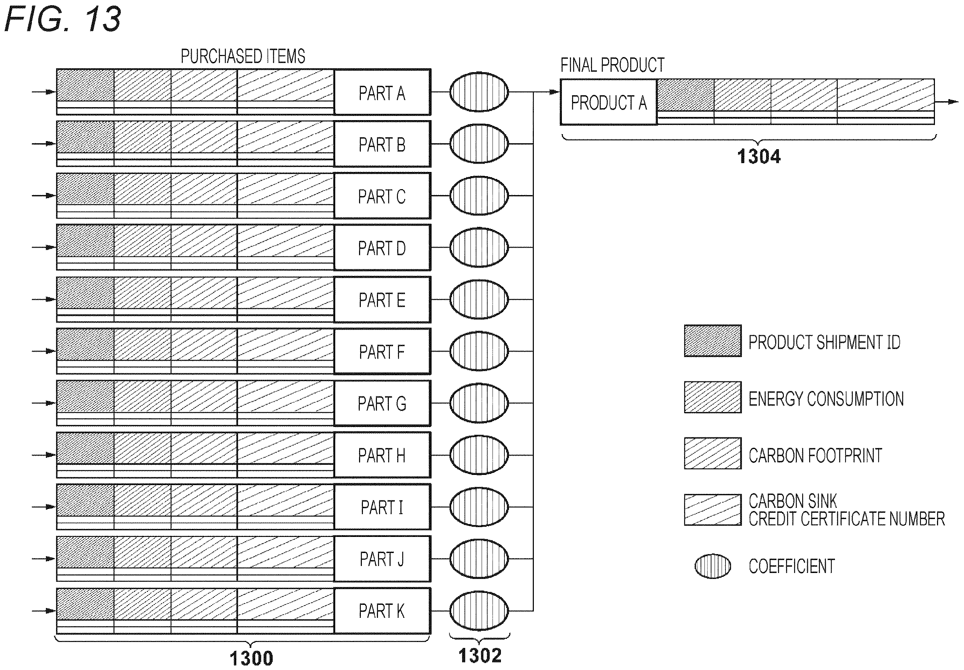

Next, processing of the intra-entity process module 404 will be described. The intra-entity process module 404 generates company activity data of one's own company on the basis of the company activity data of other companies received by the inter-entity information transmission module 402. At this time, in order to ensure the traceability of the entire supply chain, the intra-entity process module 404 associates the quantity of purchased parts with the number of parts required in a manufactured product, thereby obtaining a ratio (coefficient) of the number of parts in the product to the quantity of the purchased items. Note that, in the present embodiment, a model for obtaining the ratio (coefficient) of the number of parts in a product to the quantity of purchased items is also referred to as "input-coefficient-output model". Fig. 13 schematically illustrates an example of assigning the company activity data of each of purchased items to company activity data 1304 of a manufactured product by calculating coefficients 1302 for company activity data 1300 of various purchased items.

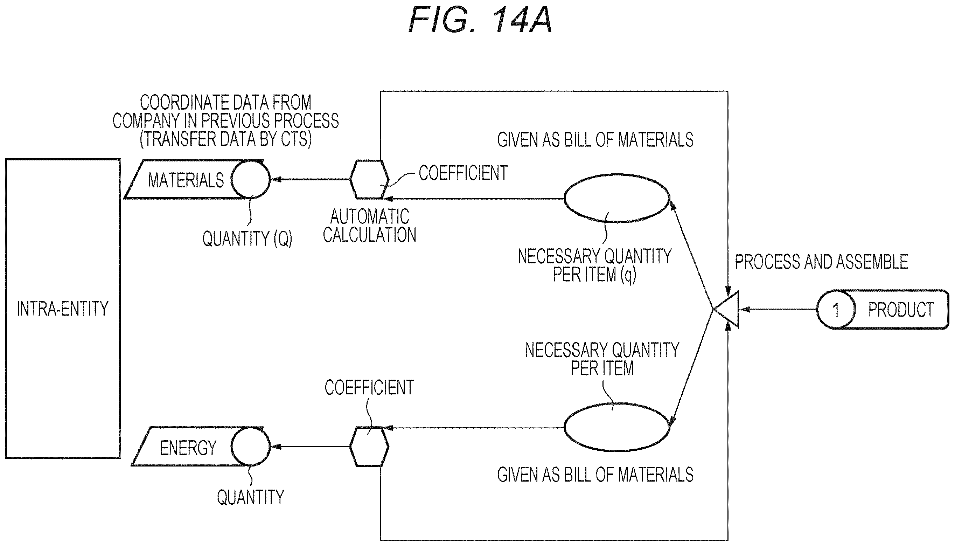

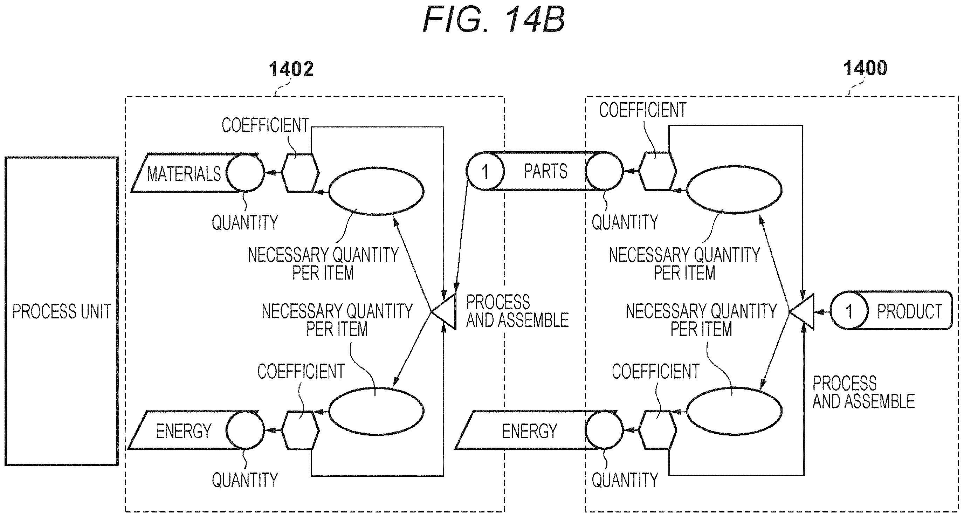

Figs. 14A and B are diagrams for explaining the input-coefficient-output model in more detail. The coefficient of this model is calculated by coefficient = q/Q from the number of necessary parts in a bill of materials and the quantity of purchased materials and parts. Here, Q is a quantity of purchased items, and q is a quantity of parts per product. This model can be applied to not only the relationship between a purchase amount and a product in the entire entity but also each specific process in the entity. For example, the model in Fig. 14A can also be applied as a model 1400 and a model 1402 in Fig. 14B. In addition, in a case where an intermediate logistics is present between the model 1400 and the model 1402, a similar model corresponding to the logistics may be inserted. As described above, by using the coefficient in the input-coefficient-output model, it is possible to ensure traceability while enabling calculation of the relationship between the activity data of the purchased items and the company activity data of the product by a simple calculation.

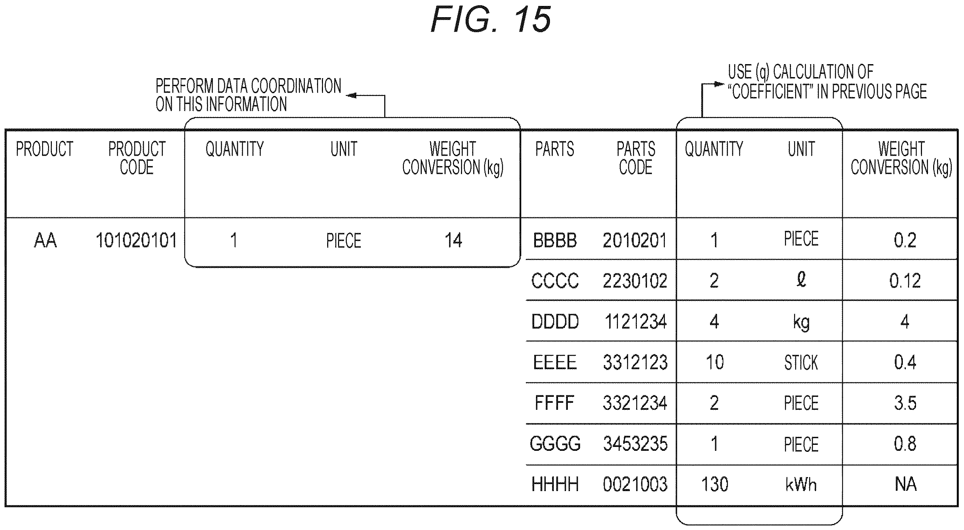

Fig. 15 illustrates an example of a bill of materials. In this example, parts "BBBB" to "HHHH" are associated with a product "AA". In addition, it is indicated that one part "BBBB" is required for one product "AA". The bill of materials may be registered via the edge node 300. Note that the registration of the bill of materials corresponds to the processing of registering a bill of materials 501 in a BOM DB in the example illustrated in Figs. 5A to 5C.

The edge node 300 may allow the user to register and browse information of the bill of materials via a screen (parts list screen) displaying a parts list. On the parts list screen, a "open hierarchy" button may be displayed together with a product (or a part in a higher layer) so that the relationship between parts in the hierarchical structure can be easily grasped, and when the button is pressed, the product (or the part in the higher layer) and a part in the lower layer may be displayed. Before the "open hierarchy" button is pressed, the part in the lower layer may be hidden and made invisible. The edge node 300 can dispose an "add button" on the parts list screen, and in response to pressing of the button, register the part in the lower layer as the component of the product (or the part in the upper layer). In addition, the edge node 300 may dispose a search field on the parts list screen, and in response to input of a parts code, a part of a parts name, or the like in the search field, search the bill of materials for the target part, and display the search result.

Here, an example of generating company activity data of an entity (transaction data of the product "AA") from company activity data of an upstream company (for example, transaction data of the parts "BBBBB" to "HHHH") will be described. When the transaction data of the product "AA" is generated, it is assumed that the edge node 300 of the entity receives the transaction data of the parts "BBBB" to "HHHH" of the upstream company (referred to as "upstream parts transactions BBBB to HHHH"). The edge node 300 generates, for example, the transaction data of the product AA by the following steps 1 to 5.

Step 1: The edge node 300 reads data of the product "AA" from the bill of materials 501.

Step 2: The edge node 300 generates the transaction data of the product "AA" (product transaction AA) and one's own transaction data of the parts "BBBB" to "HHHH" (in-house parts transactions BBBB to HHHH). The generated transaction data has a relationship in which the product transaction AA is a parent element and the in-house parts transactions BBBB to HHHH are child elements thereof.

Step 3: The edge node 300 associates each of the in-house parts transactions BBBB to HHHH with each of the upstream parts transactions BBBB to HHHH. This association may be performed, for example, by the user selecting, on a user interface, each of in-house part transactions and associating the selected transaction with each of the received upstream parts transactions.

Step 4: The edge node 300 calculates the coefficient (ratio of the number of parts in the product to the quantity of the purchased items) based on the association between the in-house parts transaction and the upstream parts transaction. Then, data of each of the in-house parts transactions is set by the coefficient and the upstream parts transaction data. That is, pieces of information such as GHG emissions, energy consumption, a carbon sink credit, and an environmental value are set in the in-house parts transaction.

Step 5: Furthermore, in response to receiving an instruction to aggregate parts transactions for the transaction of the product "AA", for example, the edge node 300 sets the transaction data of the product "AA" on the basis of the data of the in-house parts transactions BBBB to HHHH.

With the above steps, the edge node 300 can generate the transaction data of the product "AA" to be further transmitted to another company (that is, recorded in the blockchain).

The edge node 300 may support the registration processing via the parts list screen. For example, in response to receiving an instruction to create transmission data for a designated product on the parts list screen, the edge node 300 may generate a product transaction including a relationship between a product and a part (corresponding to the product transaction and the in-house parts transaction described above). The instruction to create the transmission data is received when, in response to the designation of a product on the parts list screen, a product detail screen is displayed, and a "create transmission data" button disposed on the detail screen is pressed. When the transaction data of the product (and the in-house parts transaction) is generated, the edge node 300 may transition to under edit screen display. In the under edit screen display, the product transaction (being edited) and the in-house parts transaction may be displayed in a list while maintaining the hierarchical structure.

When receiving an instruction to display a transaction selection screen for each of the in-house parts transactions in the under edit screen display, the edge node 300 selectively displays the received transaction (for example, from the upstream company). When a specific received transaction is selected on the transaction selection screen, the edge node 300 calculates the coefficient in step 4 and sets data of the in-house parts transaction on the assumption that the selected received transaction and the in-house parts transaction are associated with each other (step 3).

When the setting of the in-house parts transaction is completed, the edge node 300 receives an instruction to display a detail screen of the product transaction by the user on the under edit screen display. The edge node 300 disposes an "aggregate button" for aggregating the in-house parts transactions on the product transaction detail screen. When the "aggregate button" is pressed, the processing of step 5 is performed to set data of the product transaction.

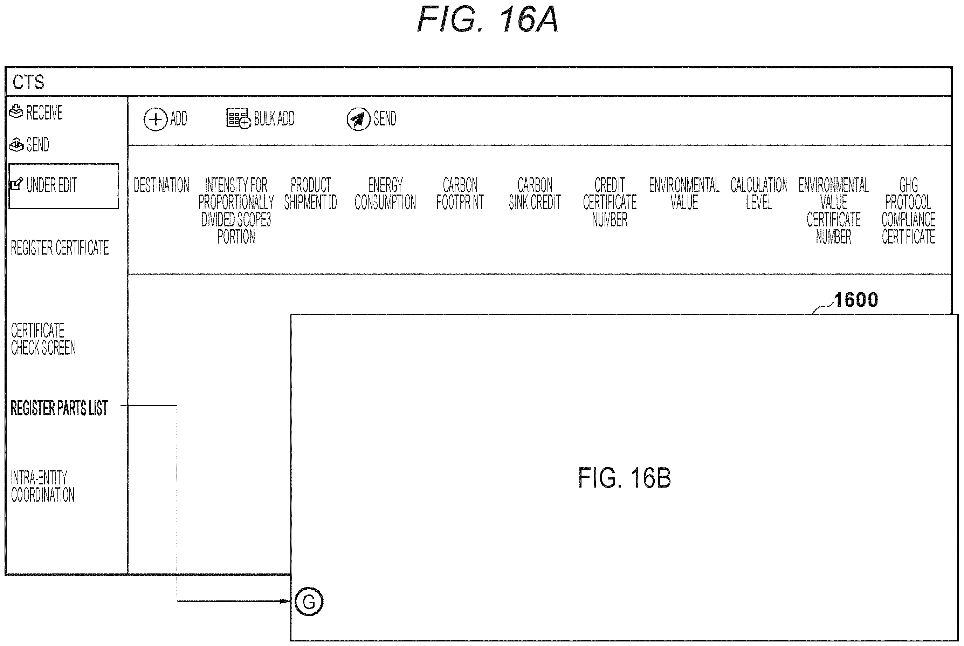

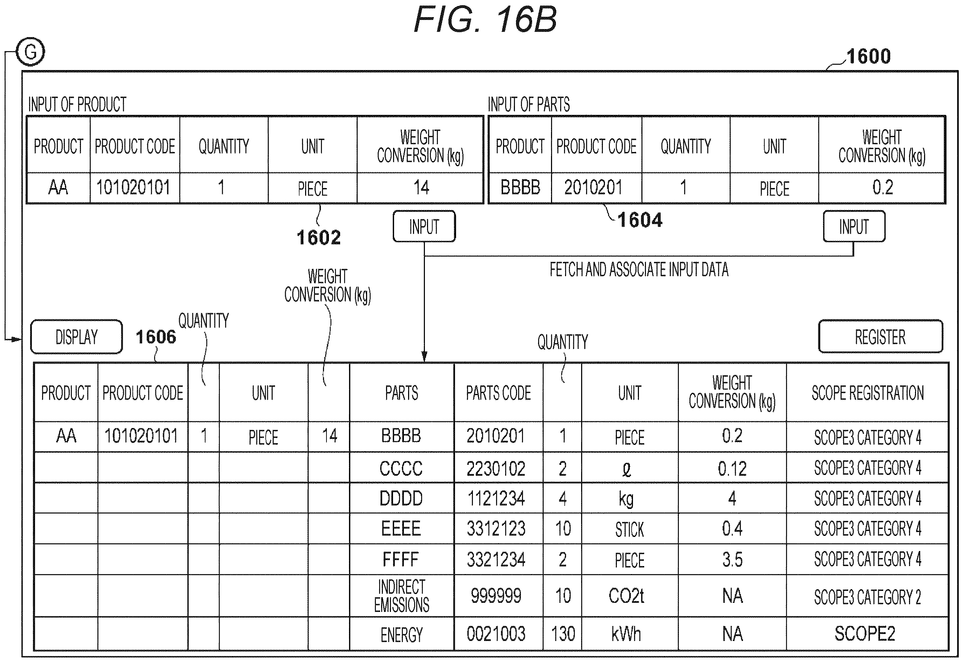

Figs. 16A and 16B schematically illustrate another example 1600 for a user to associate product transaction data with parts transaction data via a user interface provided by the edge node 300. In response to pressing of a register parts list button on the user interface, the edge node 300 starts inputting product information and the like. In the example illustrated in Figs. 16A and 16B, first, when product information 1602 and parts information 1604 are input, the edge node 300 generates a bill of materials 1606 in which the product information 1602 and the parts information 1604 are associated with each other. At this time, the edge node 300 then further associates indirect emissions data for the product "AA". The edge node 300 may read indirect emissions data from a table (not illustrated) registered in advance, or may receive an input by the user. The edge node 300 also associates energy consumption for the product "AA", which is shown in an "energy" row. The edge node 300 may also read the energy consumption from a table (not illustrated) registered in advance or may receive an input by the user. The energy consumption is data for calculating the Scope 2 emissions of the entity. In addition, the edge node 300 adds a "SCOPE registration" column indicating which calculation of Scope each item associated with the product "AA" is used. For example, the "energy" row associated with the product "AA" falls into Scope 2, while the other rows fall into Scope 3. Further, information indicating which category of Scope 3 the item corresponds may be further included.

Note that, in the present embodiment, the case where the input-coefficient-output model is applied between the product and the parts is described as an example, but it will be apparent to those skilled in the art that the model can be applied in various levels such as a company level, a business level, a manufacturing line level, and a manufacturing process level.

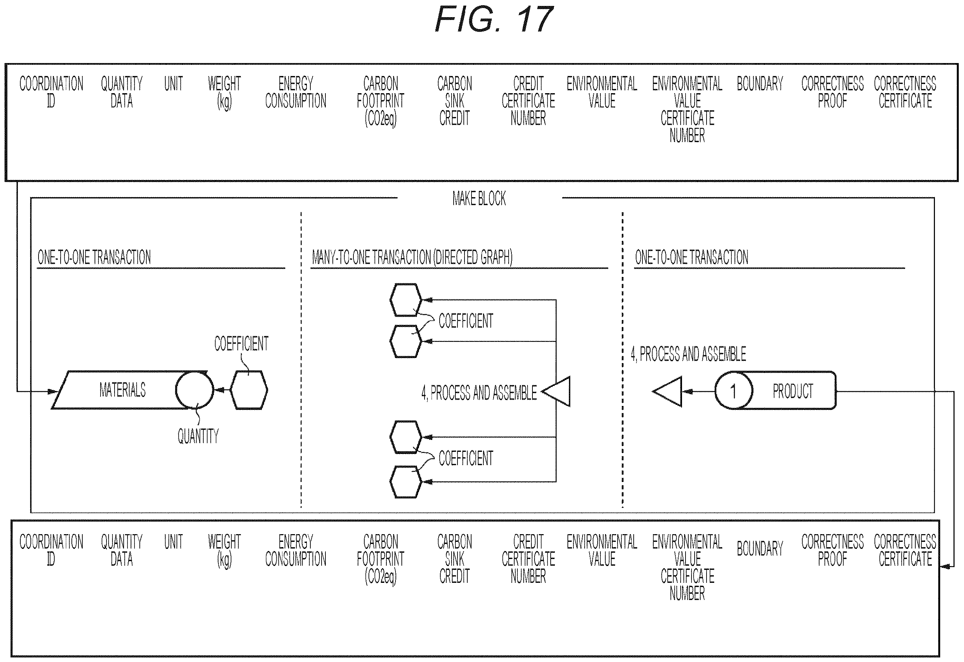

In the calculation of the association of the number of parts in the product with the quantity of purchased items by the input-coefficient-output model described above, the parts transactions are aggregated into the product transaction as illustrated in Fig. 17. The edge node 300 receives transaction data (that is, upstream parts transaction) of another company related to the purchased items, and calculates coefficients with respect to the quantity of the purchased items by the method described above in Figs. 14 and 15. Next, coefficients for a plurality of purchased items associated with the specific product are calculated. Then, the parts transaction data is aggregated into the transaction data of the specific product.

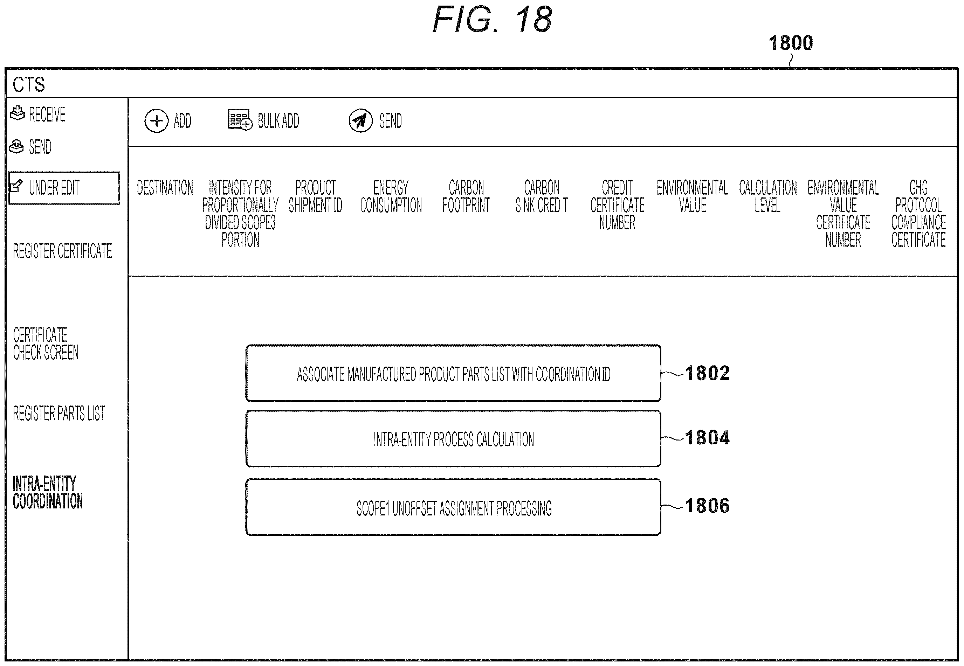

Furthermore, Fig. 18 illustrates another example (user interface 1800) related to the intra-entity coordination processing performed in the intra-entity process module 404. The intra-entity coordination processing starting from the user interface 1800 includes, for example, (1) manufactured product parts list-coordination ID association processing, (2) intra-entity process calculation processing, and (3) SCOPE 1 unoffset assignment processing. When an "associate manufactured product parts list with coordination ID" button 1802 is pressed, the edge node 300 starts the manufactured product parts list-coordination ID association processing to be described later, and when an "intra-entity process calculation" button 1804 is pressed, starts the intra-entity process calculation processing. In addition, when a "SCOPE 1 unoffset assignment processing" button 1806 is pressed, the SCOPE 1 unoffset assignment processing, which will be described later, is started. The manufactured product parts list-coordination ID association processing and the SCOPE 1 unoffset assignment processing will be described later.

In the intra-entity process calculation processing, the edge node 300 receives the actual quantity of shipped products, and calculates energy consumption information, GHG emissions (carbon footprint) information, and information of offsets such as a credit and an environmental value based on a product shipment volume.

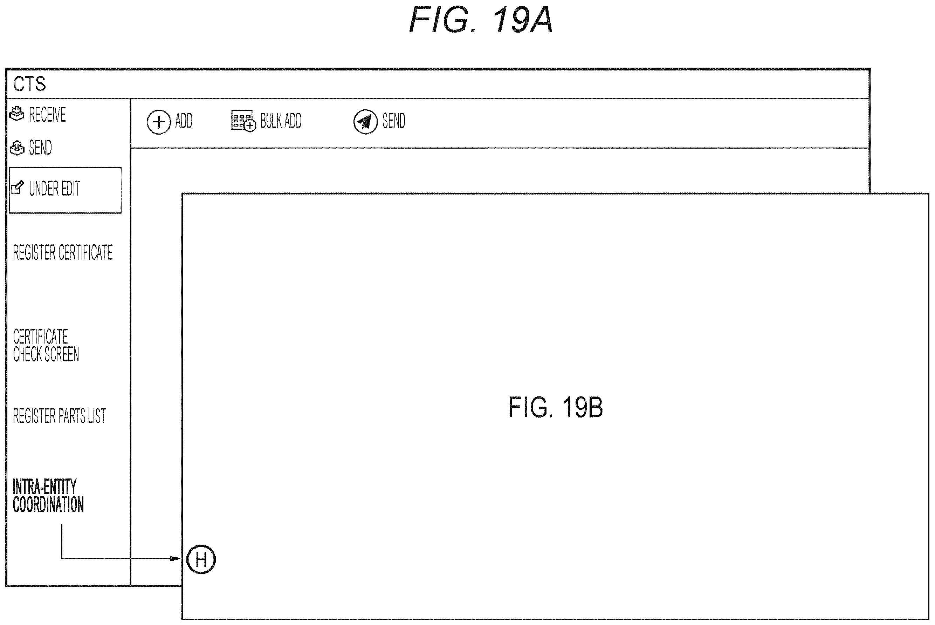

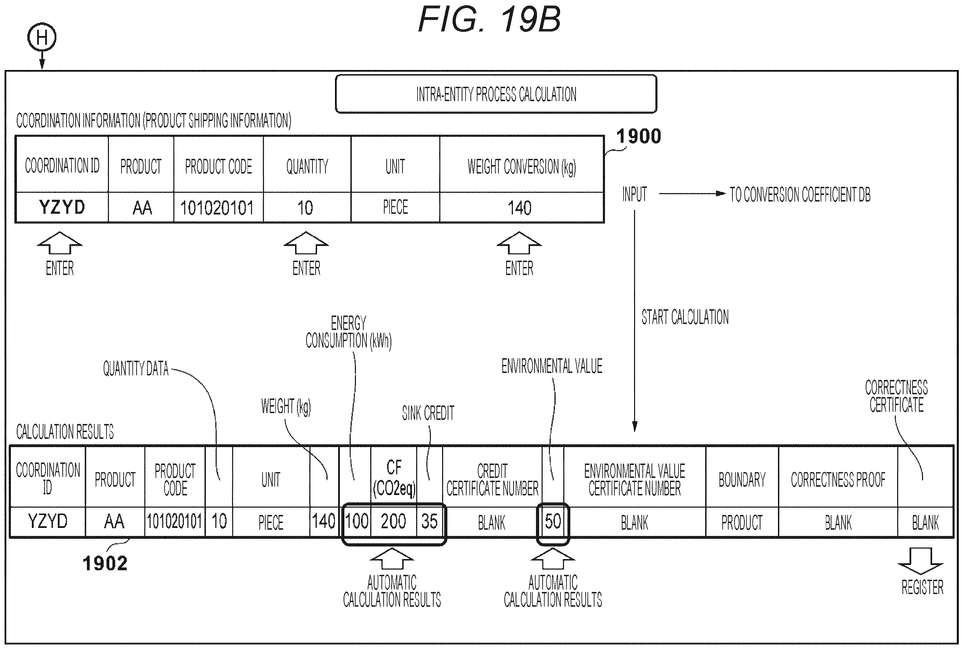

For example, Figs. 19A and 19B schematically illustrate an example of generating a calculation result 1902 including GHG emissions and offset information for a shipping quantity of products by the intra-entity process calculation processing. First, the edge node 300 receives a user input to product shipping information 1900 reflecting the product shipment volume. The edge node 300 receives, for example, a coordination ID, the quantity of products, and a numerical value of weight conversion for the product shipping information 1900. The coordination ID is an identifier for coordinating shipping quantity information with offset information of certificates.

The edge node 300 registers the input coordination information in the conversion coefficient DB, and performs a calculation of associating the coordination information, the bill of materials, and the offset information. The edge node 300 automatically calculates the information of GHG emissions, energy consumption, the credit, and the environmental value based on the product shipment volume, and displays the information as the calculation result 1902. The edge node 300 may cause an external device to output the calculation result 1902 as the company activity data of the company. Note that the total value of Scope 1 to 3 is included in the company activity data by the "manufactured product parts list-coordination ID association processing" to be described later.

Note that the processing described with reference to Figs. 19A and 19B corresponds to the execution of the intra-entity process calculation 503 on the basis of inputs of the coordination ID, shipped products and quantity of shipped products in the example illustrated in Figs. 5A to 5C.

### <Offset Division Processing by Credit Certificate and Environmental Value Certificate Subtraction Module>

The credit certificate and environmental value certificate subtraction module 406 divides offsets related to a credit certificate, an environmental value certificate, and the like on a product basis. Therefore, in order to achieve the assignment of the offset on a product basis, the module 406 performs environmental value subtraction processing, branch numbering processing, and registration in an association record disclosure DB.

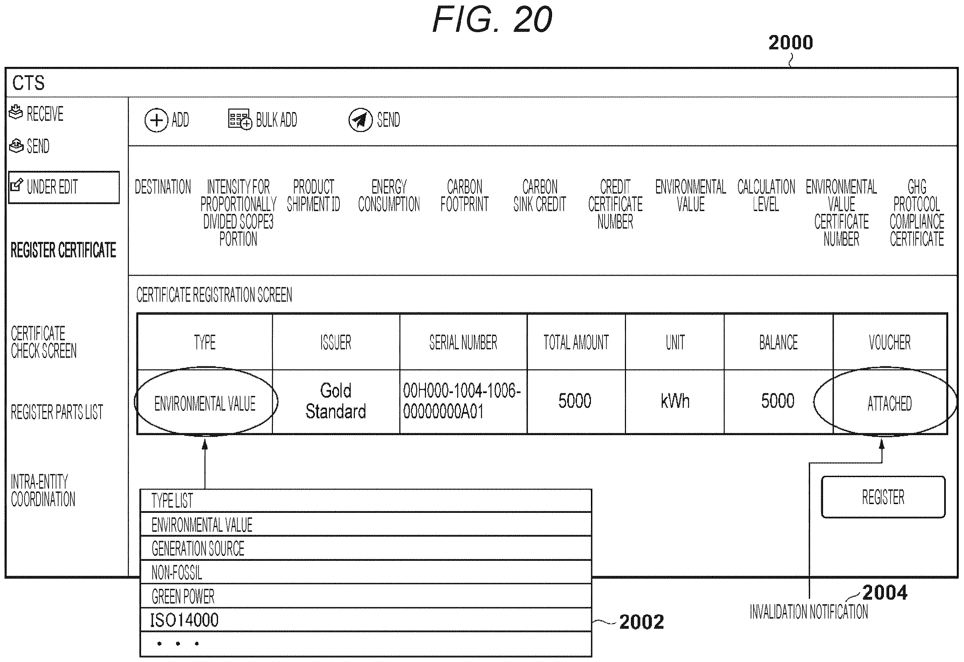

In practice, since various certificates are provided as certificates for offsets, different types of certificates can be accepted in the present embodiment. In the present embodiment, for example, the environmental value and the credit are described as an example, but it may be possible to accept a GHG protocol compliance certificate and an ISO 140000 series certificate. Fig. 20 schematically illustrates a certificate registration screen 2000 for registering a certificate acquired by a company. The type of signature to be registered can be selected from a list of predetermined certificate types. A type list 2002 may include, for example, environmental value, generation source, non-fossil, green power, ISO 14000, and the like. The certificate registration information includes certificate type, issuer, serial number, total amount of emissions to be reduced, unit, balance of available emissions, and the like. Furthermore, a voucher such as an invalidation notification 2400 can be further registered for checking the acquisition of certificates.

The edge node 300 can display a certificate list screen that displays a list of registered certificates. On the certificate list screen, registered certificates may be displayed in a list. When the user selects information of a specific certificate, the edge node 300 can display a detail screen that displays detailed information of the selected certificate.

In addition, the edge node 300 may dispose an "add" button for newly registering a certificate on the certificate list screen, and in response to pressing of the add button, display a certificate registration screen. The edge node 300 displays all the fields in an empty state at the beginning of the display of the certificate registration screen. Then, when the file of a certificate to be read is designated, registration information of the designated certificate, for example, a serial number, numerical data, or the like is read and displayed on the screen. Note that the edge node 300 sets the available balance of the certificate to the total balance of the certificate at the timing when the certificate is added. The edge node 300 refers to the certificate when transaction data is created, and in response to the transmission of the transaction, subtracts the balance by the numerical value used in the transaction.

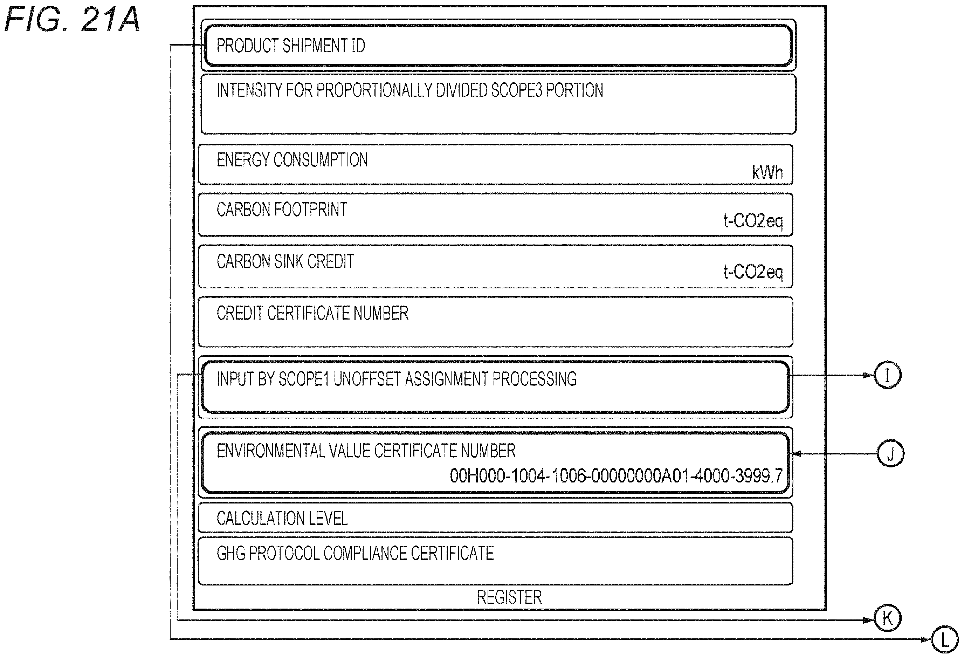

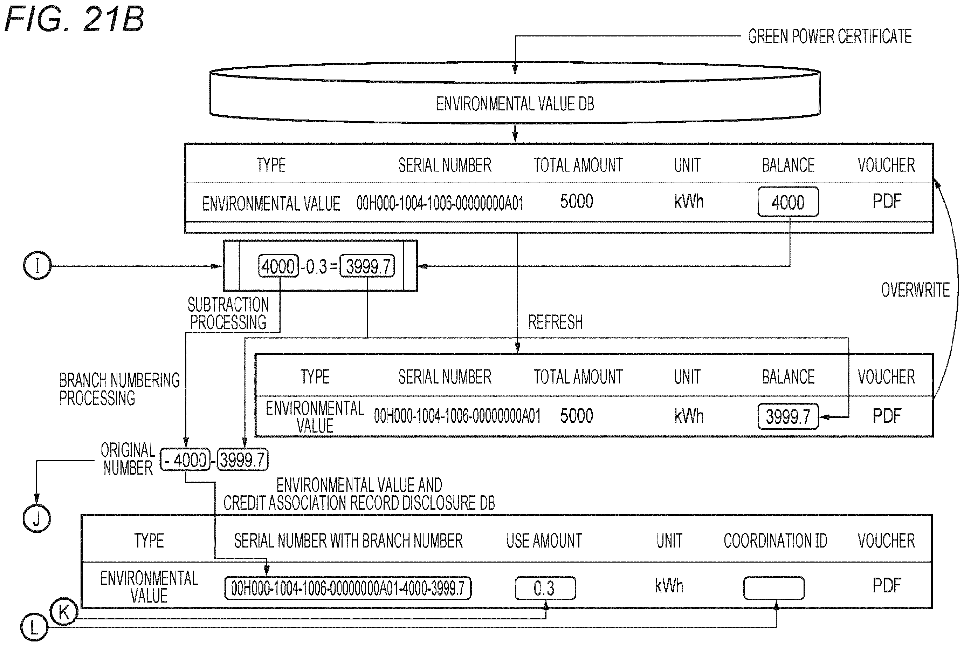

Figs. 21A and 21B illustrate another example of the processing on a certificate. First, the edge node 300 acquires the balance (for example, 4000) of the certificate data stored in the environmental value DB, and subtracts an offset (for example, 0.3) for a product calculated in "Scope 1 unoffset assignment processing" to be described later. Next, the balance (for example, 3999.7) of the environmental certificate is updated. The edge node 300 may separately record the balance of the environmental value in a database, or may perform the record by branch numbering processing. In the branch numbering processing, a branch number (for example, "4000-3999.7") including a numerical value before subtraction and a numerical value after subtraction is generated in the original serial number. The edge node 300 registers the serial number with the branch number together with the environmental value and the use amount in the environmental value and credit association record disclosure DB. As illustrated in Figs. 5A to 5C, the environmental value and credit association record disclosure DB is disclosed so as to be referable from the outside of the information coordination system 100. When the branch number including numerical values before and after subtraction is attached to the serial number of the certificate, the distribution of an offset for small emissions such as emissions at a product level different from emissions at a company level can be traced by the serial number.

Note that, in the example illustrated in Figs. 5A to 5C, the offset division processing by the credit certificate and environmental value certificate subtraction module corresponds to numbering branch number for serial number 506, add branch number for serial number to DB, and create environmental value and credit association record disclosure DB 507. Here, as described above, the balance of the environmental value may be recorded by another method.

Note that, the above description has been given by taking the environmental value certificate as an example, but the module 406 can perform similar processing not only on the environmental value but also on the carbon sink credit.

### (Inter-Module Coordination)

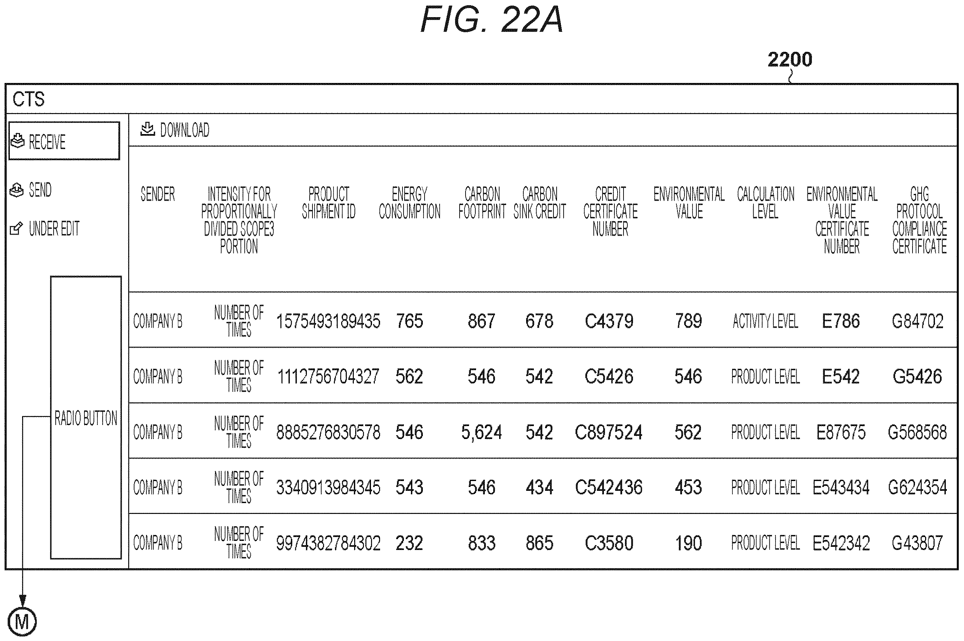

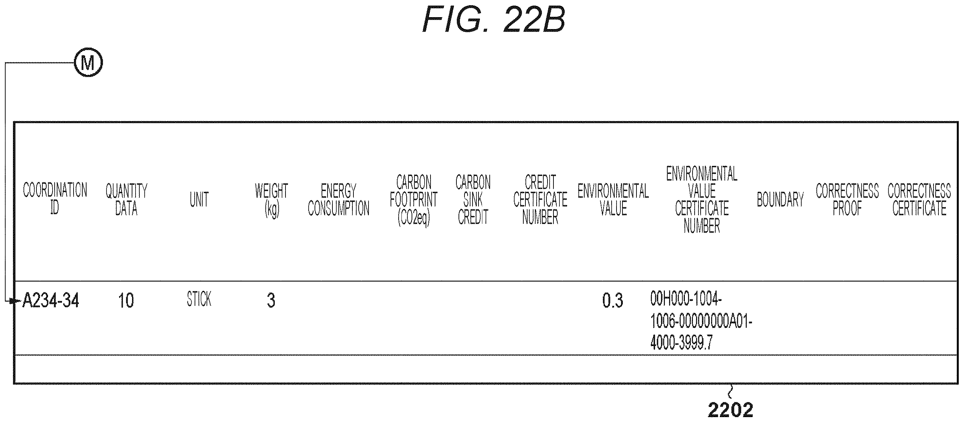

Next, as the coordination between the inter-entity information transmission module 402 and the intra-entity process module 404, processing of accepting environmental value certificate information and carbon sink credit information will be described. The edge node 300 may display the certificate list screen described above, or may accept the certificate information on a reception list screen 2200 as illustrated in Figs. 22A and 22B. For example, when the user selects one of the received company activity data (for example, by selecting a radio button), the edge node 300 displays environmental value information 2202 associated with the product of the selected company activity data. The environmental value information 2202 includes a coordination ID, an assigned environmental value, an environmental value certificate number with a branch number, and the like.

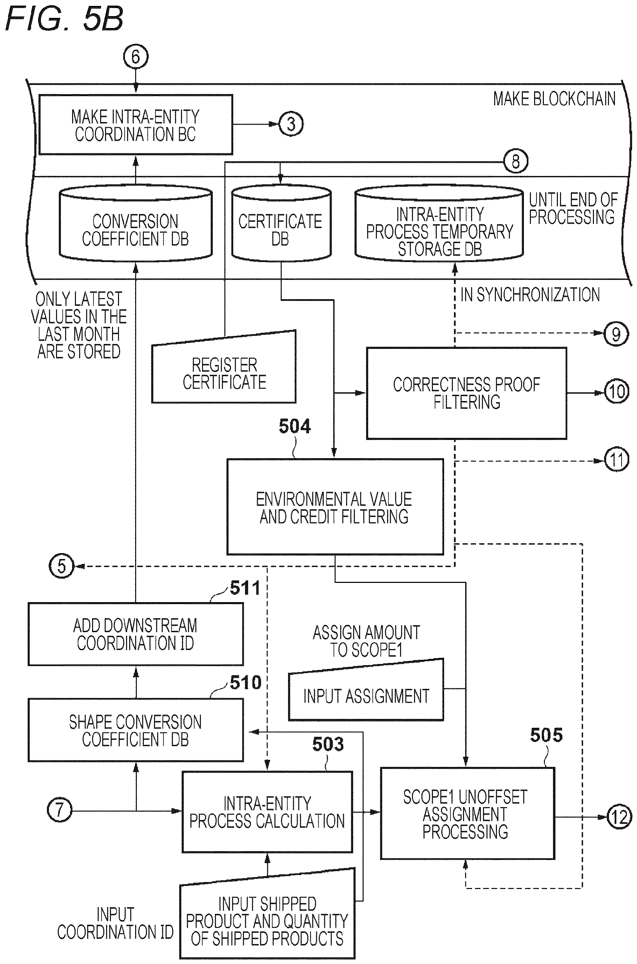

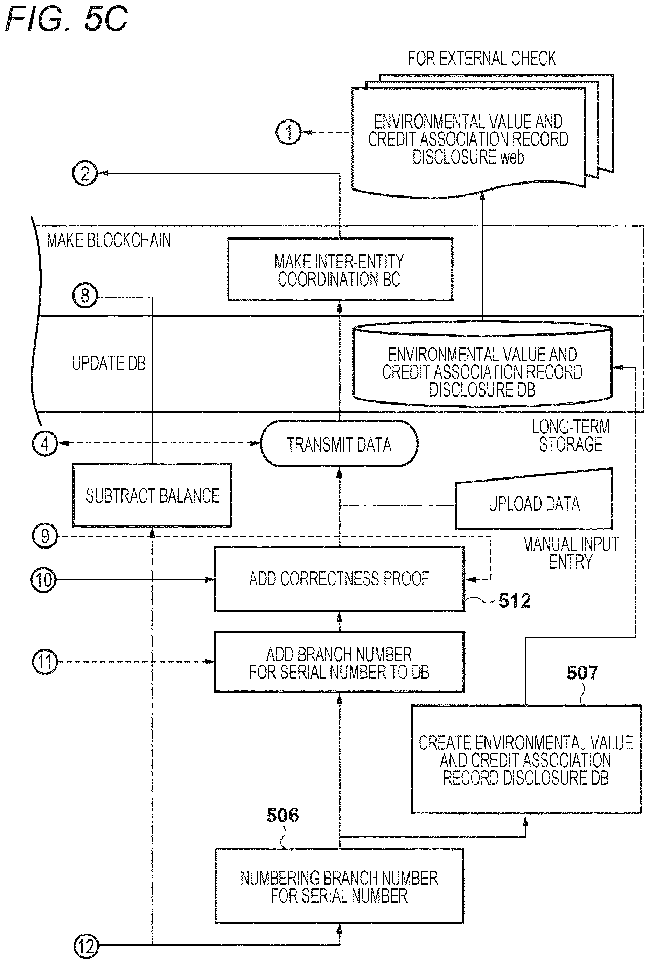

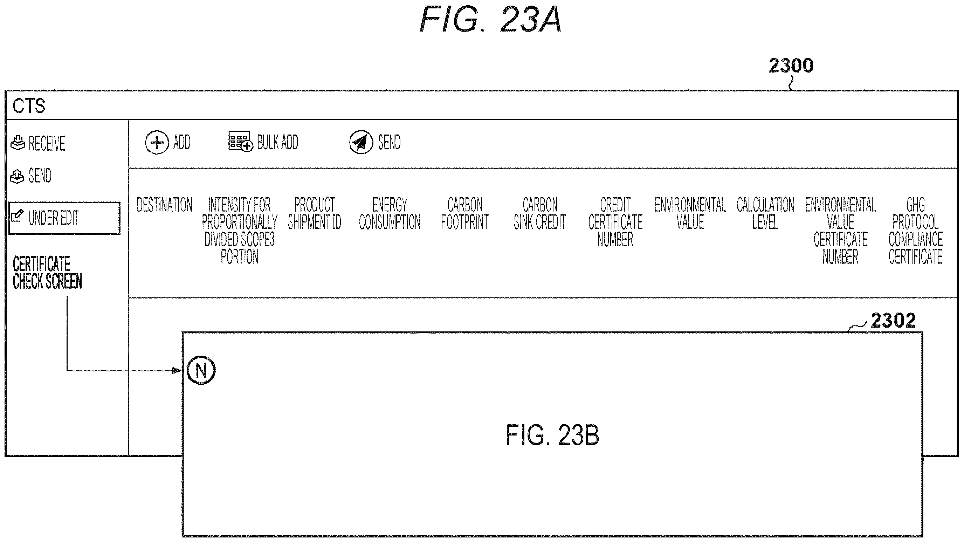

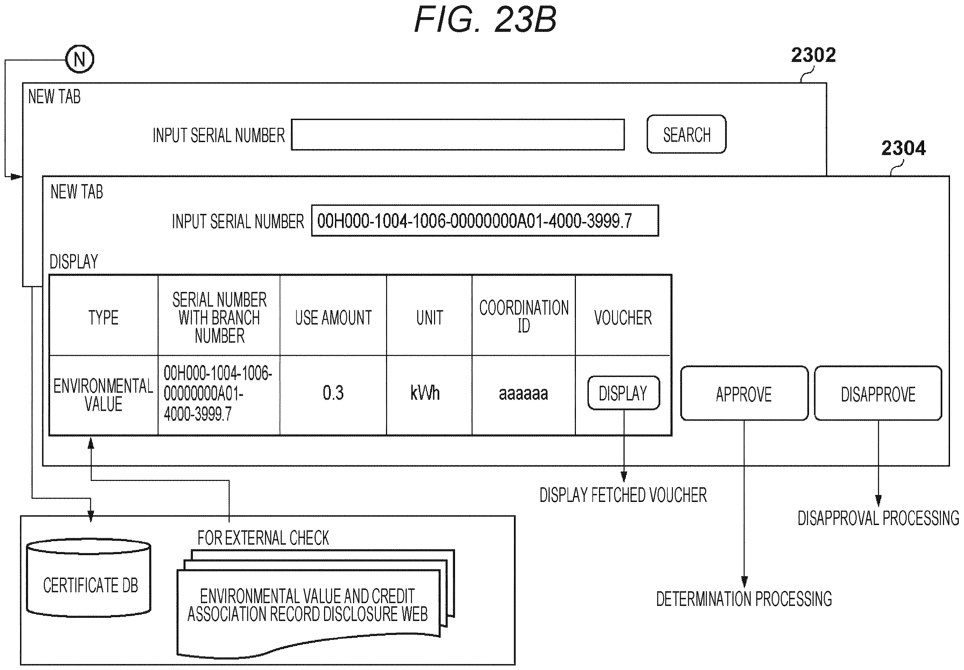

In addition, the edge node 300 may display the detailed information of the certificate on the certificate list screen as described above. As another example, the edge node 300 can display a certificate check screen for checking a certificate, for example. When receiving an instruction to check a certificate on a main screen 2300 illustrated in Figs. 23A and 23B, the edge node 300 displays a search screen 2302 for searching for a certificate. The edge node 300 searches the certificate DB or the environmental value and credit association record disclosure DB (illustrated in Figs. 5B and 5C) for the certificate with the serial number input on the search screen 2302, and in a case where the certificate matching the serial number is found, displays the certificate on a check screen 2304. The edge node 300 displays the type of the certificate, the serial number with the branch number, the use amount, the coordination ID, and the like on the check screen 2304. In addition, on the check screen 2304, it is possible for the user to set whether to approve or disapprove the certificate. The edge node 300 determines the acceptance of the certificate if the user selects to approve the certificate and does not accept the certificate if the user disapproves the certificate. In addition, the check screen 2304 includes a button or a link for displaying an attached voucher.

In a case where the approve button is pressed, the edge node 300 downloads the target certificate. On the other hand, in a case where the disapprove button is pressed, the environmental value and the carbon sink credit in the data to be downloaded are erased.

Note that the processing of accepting the environmental value certificate information and the carbon sink credit information corresponds to processing of calling a certificate from an environmental value and credit association record disclosure Web or the environmental value and credit association record disclosure DB and determining upstream accepted data in the selection of approval or disapproval in check certificate 508 in the example illustrated in Figs. 5A to 5C.

An example of setting the product transaction data on the basis of the bill of materials and the received parts transaction data has been described in the above description. However, as another example, the manufactured product parts list-coordination ID association processing to be described below may be performed. The manufactured product parts list-coordination ID association processing may be performed in a case where the "manufactured product parts list-coordination ID association" button 1802 illustrated in Fig. 18 is pressed.

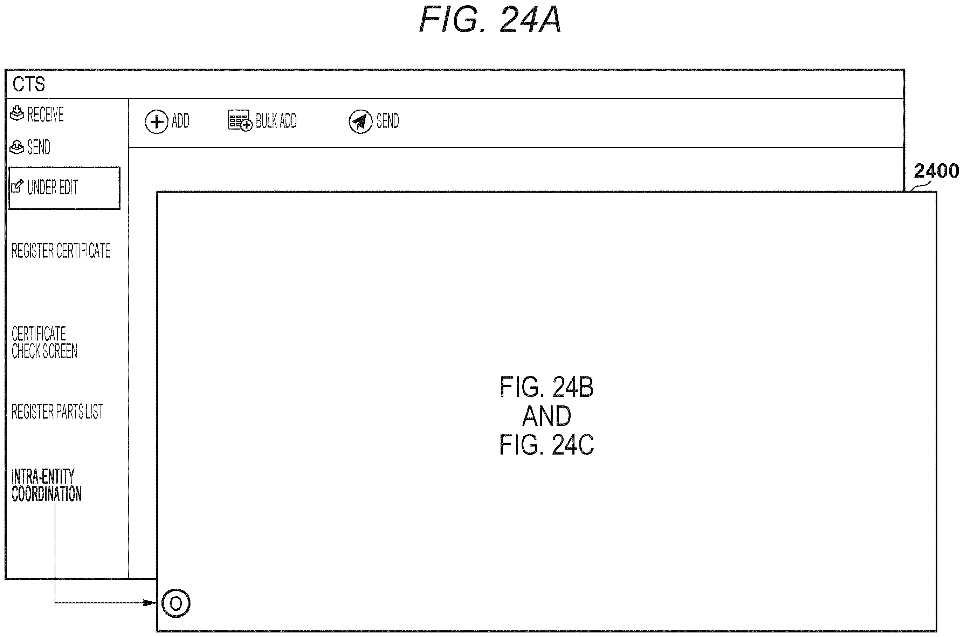

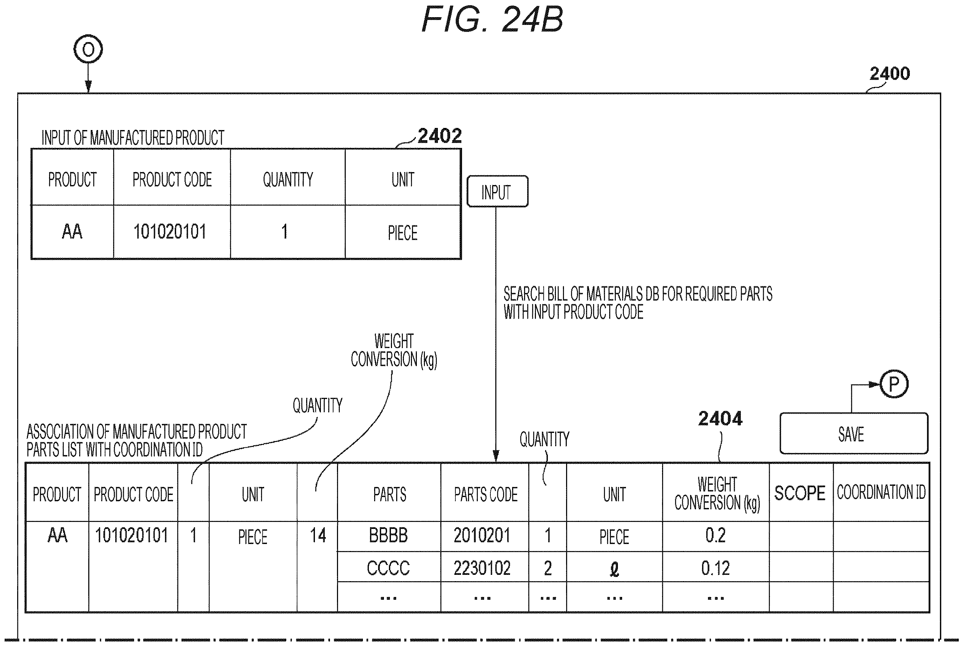

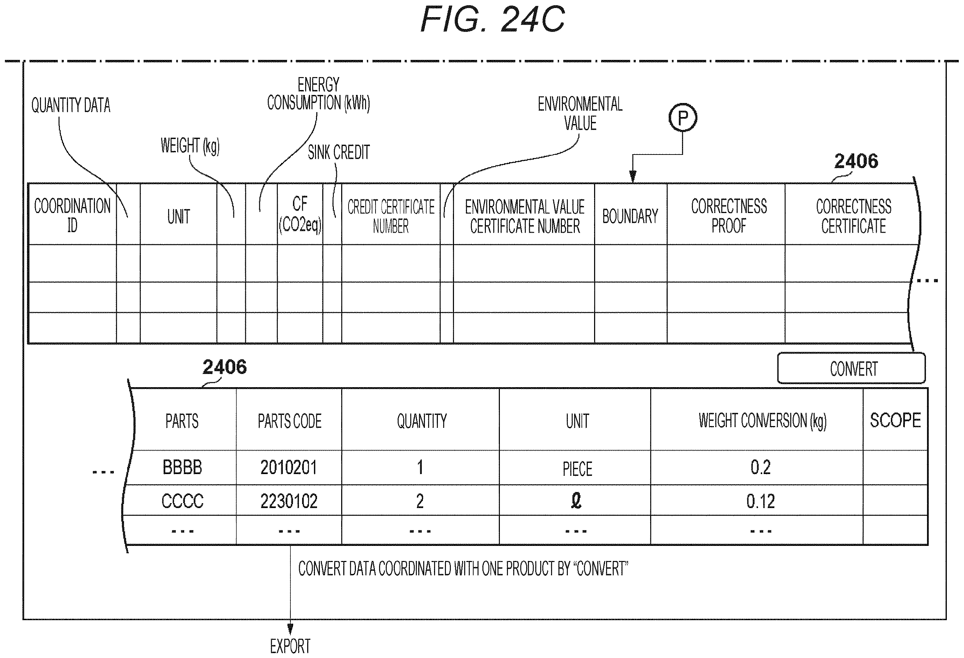

Figs. 24A to 24C schematically illustrate manufactured product parts list-coordination ID association processing. First, the edge node 300 receives an input of a product code of a manufactured product from a user (2402), and searches the bill of materials DB for information of necessary parts. The edge node 300 displays coordination ID association information 2404 that enables a coordination ID to be attached to the bill of materials data. When receiving the input of the coordination ID from the user and further receiving an instruction to save, the edge node 300 generates coordination data 2406, which is data in which parts information and offset information are coordinated with one product, and displays the data as display data. At this time, the edge node 300 searches for the coordination ID of the certificate (displayed on the check screen 2304) that matches the coordination ID input to the coordination ID association information 2404, for example. When the matched coordination ID of the certificate is found, the edge node 300 generates the coordination data 2406 by associating the coordination ID association information 2404 with the certificate data.

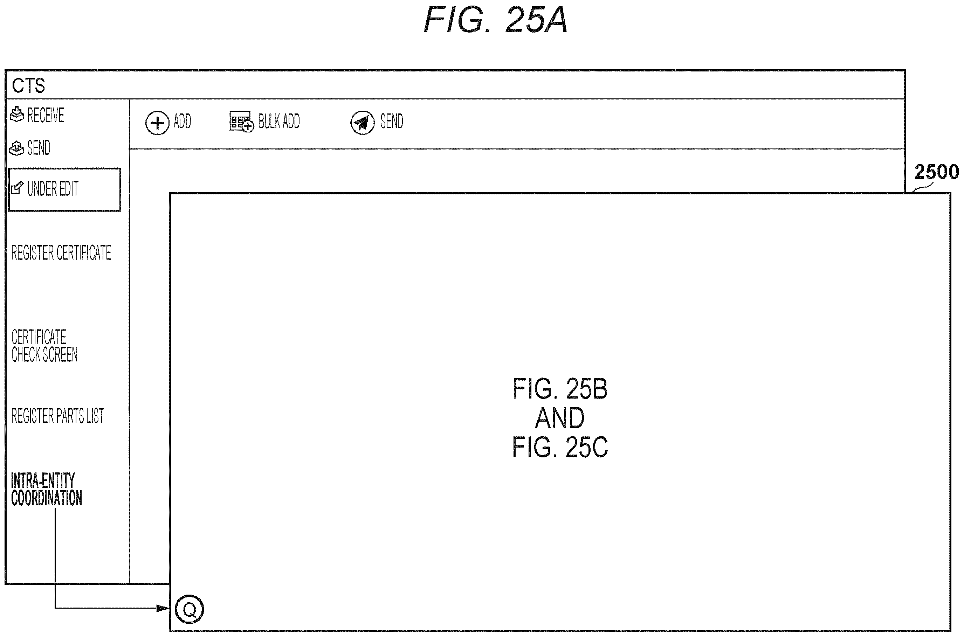

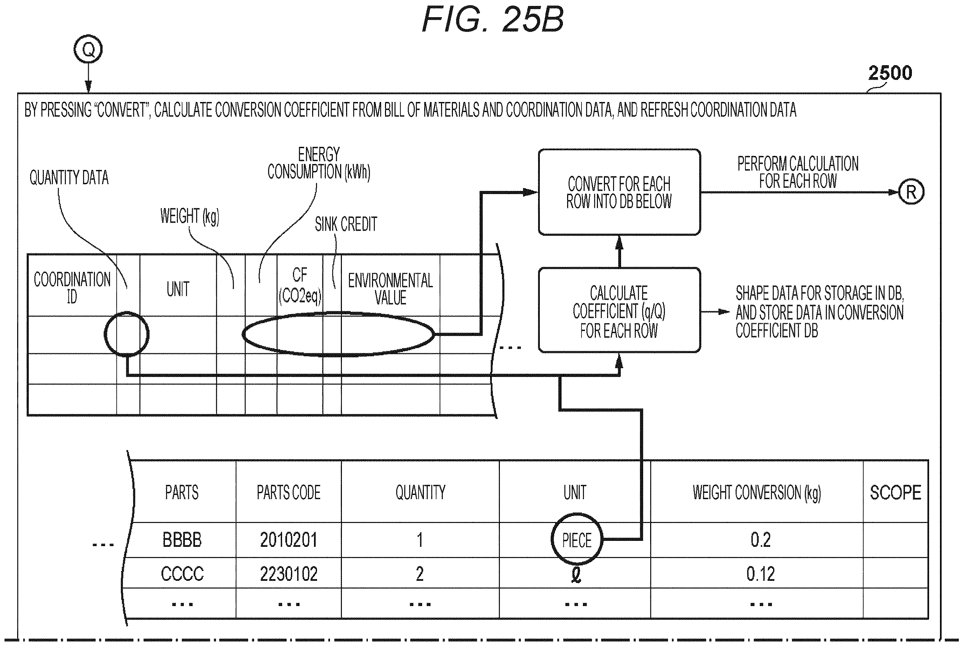

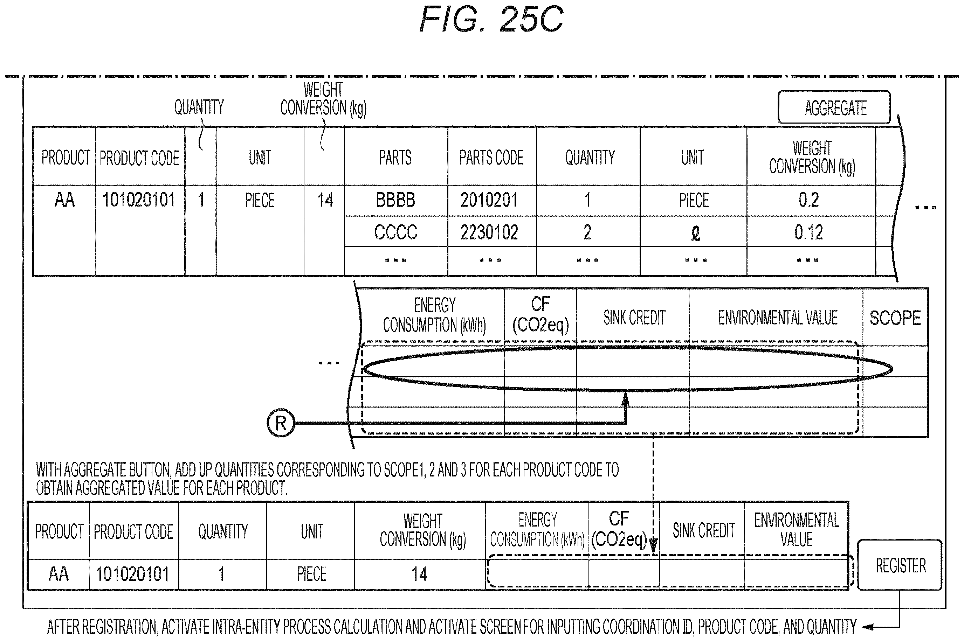

Furthermore, when receiving an input to a convert button from the user, the edge node 300 performs the conversion processing illustrated in Figs. 25A to 25C. In Figs. 25A to 25C, a conversion coefficient is calculated from the bill of materials and the coordination data 2406, and the value of the coordination data is updated. Specifically, the edge node 300 calculates the coefficient of the input-coefficient-output model on the basis of quantity data of the manufactured product (corresponding to the quantity and number of products) and the number of necessary parts in the bill of materials. Then, the energy consumption, the GHG emissions (carbon footprint), the sink credit, and the environmental value included in the coordination data 2406 are multiplied by the calculated coefficient to calculate and display the energy consumption, the GHG emissions (carbon footprint), the sink credit, and the environmental value per product (Fig. 25B). The edge node 300 calculates the coefficient for all the parts associated with the manufactured product (corresponding to calculation for each row of the coordination data 2406).

Next, when receiving an aggregation instruction from the user, the edge node 300 adds up all the values of the energy consumption, the GHG emissions, the sink credit, and the environmental value corresponding to Scope 1, Scope 2, and Scope 3 for each product code, and outputs the total value of each item as an aggregated value for each product. Thereafter, the edge node 300 activates the intra-entity process calculation and displays the product shipping information 1900 to which the coordination ID, the quantity, and the like are input.

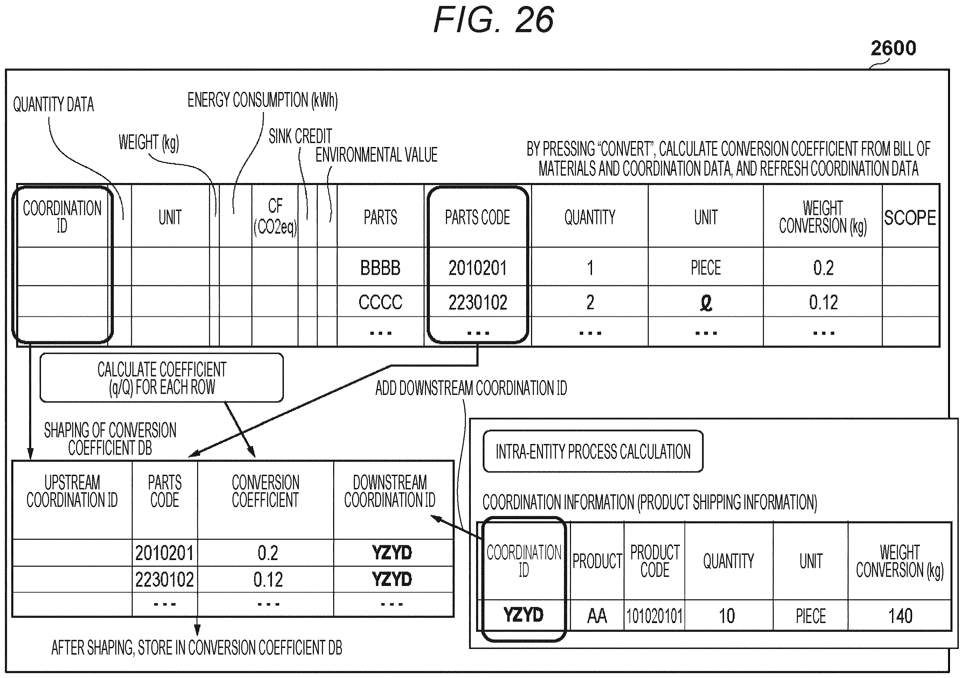

In addition, the edge node 300 reconfigures the conversion coefficient DB on the basis of the coordination data 2406. Fig. 26 illustrates processing of reconfiguring the conversion coefficient DB using the coordination ID and the parts code of the coordination data 2406 and the coordination ID of the product shipping information input in the intra-entity process calculation. The edge node 300 creates a table of the conversion coefficient DB using the coordination ID and the parts code included in the coordination data 2406 as the upstream coordination ID and the parts code, and using the coordination ID of the product shipping information 1900 of Fig. 19B as the downstream coordination ID. The edge node 300 stores the created table in the coefficient DB.

Note that, in the example illustrated in Figs. 5A to 5C, the manufactured product parts list-coordination ID association processing described above corresponds to associate manufactured product parts list with coordination ID 502, calculate conversion coefficient, and convert and aggregate accepted data 509, shape conversion coefficient DB 510, and add downstream coordination ID 511.

In addition to the offset assignment method described above, as another example, the SCOPE 1 unoffset assignment processing may be performed. The SCOPE 1 unoffset assignment processing may be performed, for example, in a case where the "SCOPE 1 unoffset assignment processing" button 1806 illustrated in Fig. 18 is pressed. In the SCOPE 1 unoffset assignment processing, first, a credit and an environmental value are additionally assigned to a portion that is not offset in the SCOPE 1 company activity data of the entity. Then, the processing of the environmental value certificate subtraction module described above is performed to generate a serial number with a (new) branch number (indicating an assigned portion).

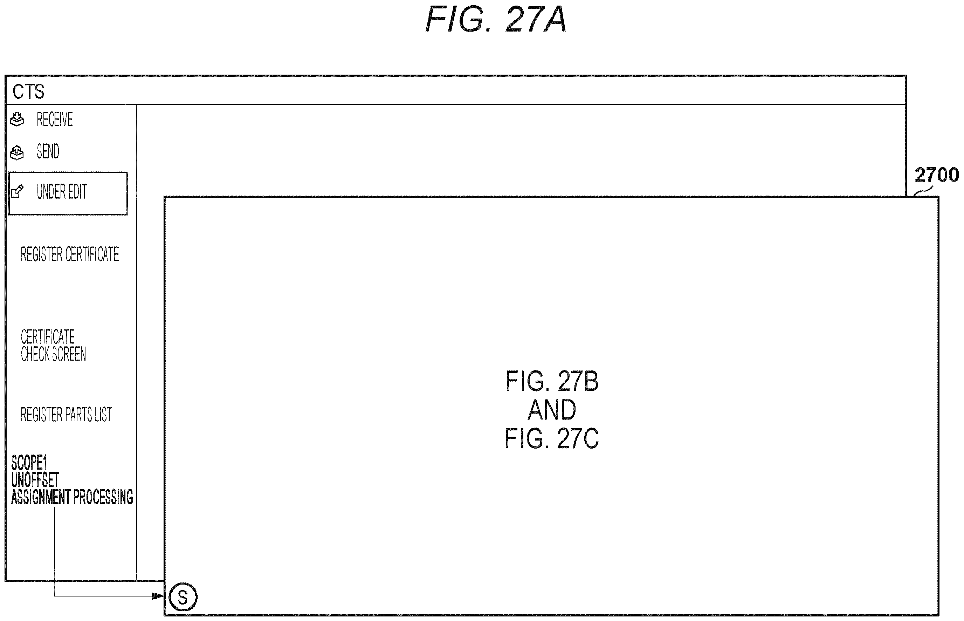

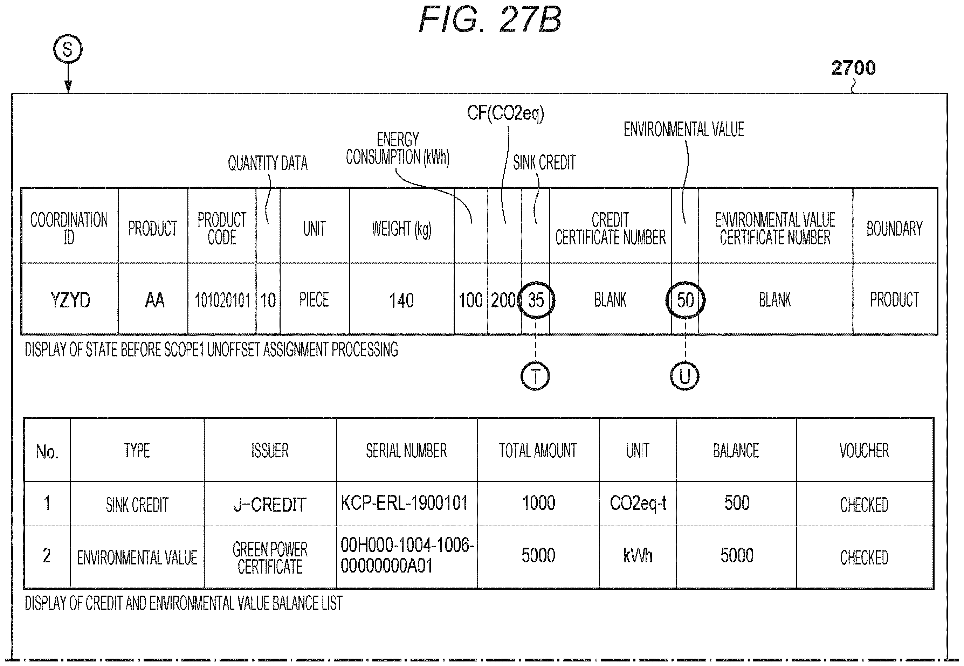

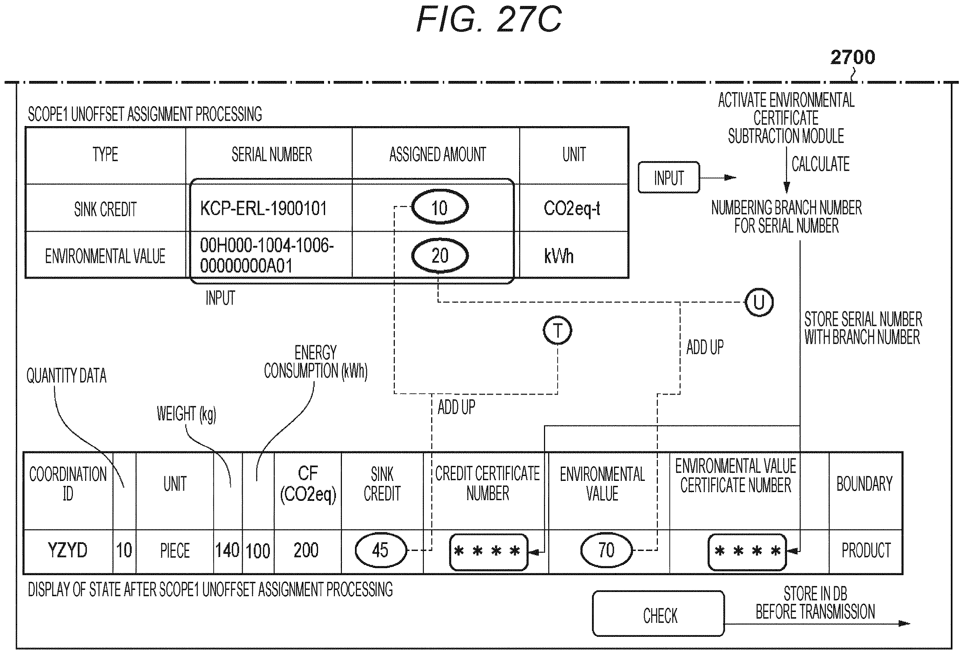

Figs. 27A to 27C schematically illustrate SCOPE 1 unoffset assignment processing. Note that values of the sink credit and the environmental value in the coordination data before this processing is performed are 35 and 50, respectively. When the "SCOPE 1 unoffset assignment processing" button 1806 is pressed, the edge node 300 displays a credit and environmental value balance list. For example, the edge node 300 reads the certificate information stored in the certificate DB and displays a list. Information such as a certificate type, an issuer, a serial number, a balance, and the like is displayed in the list.

Next, for example, for the selected certificate, assigned amounts to be newly assigned to the balances of the sink credit and the environmental are received. Thereafter, when the user presses, for example, an input button, the edge node 300 performs the environmental value subtraction processing, the branch numbering processing, and the storage processing in the disclosure DB illustrated in Fig. 21B. The edge node 300 adds a newly assigned amount to each of the sink credit and the environmental value already assigned (35 and 50, respectively), and performs the branch numbering processing based on the new assigned amounts. The values of the sink credit and the environmental value of the coordination data after the processing is performed increase to 45 and 70, respectively. Note that the offset described here is an offset for Scope 1 emissions of the one's own company.

Note that the SCOPE 1 unoffset assignment processing described with reference to Figs. 27A to 27C corresponds to processing such as input assignment, SCOPE 1 unoffset assignment processing 505, number branch number for serial number 506, and "add branch number for serial number to DB" in the examples of Figs. 5A to 5C.

### <Addition of Correctness Proof>

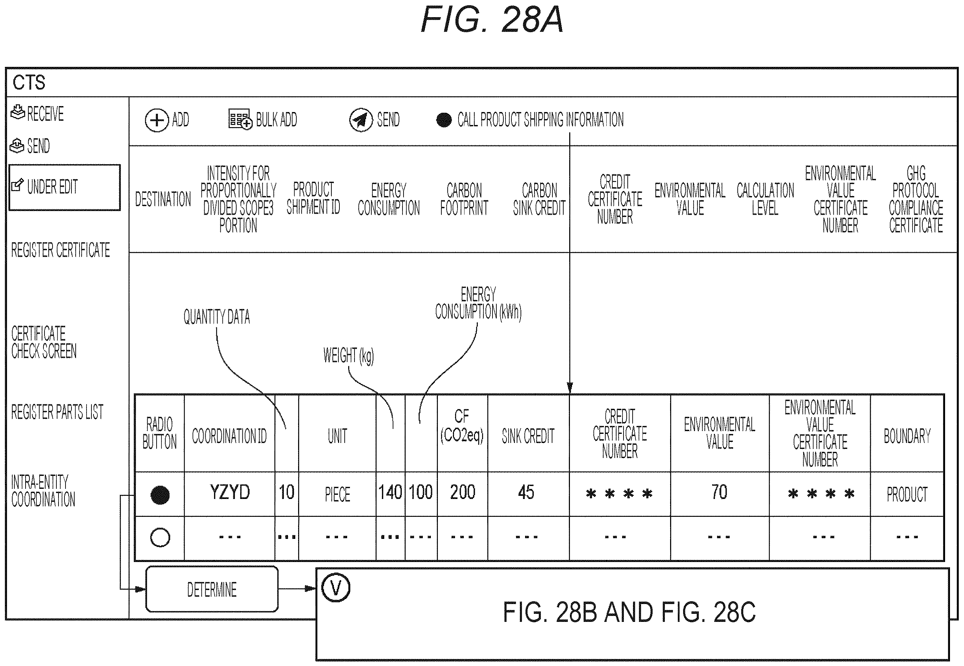

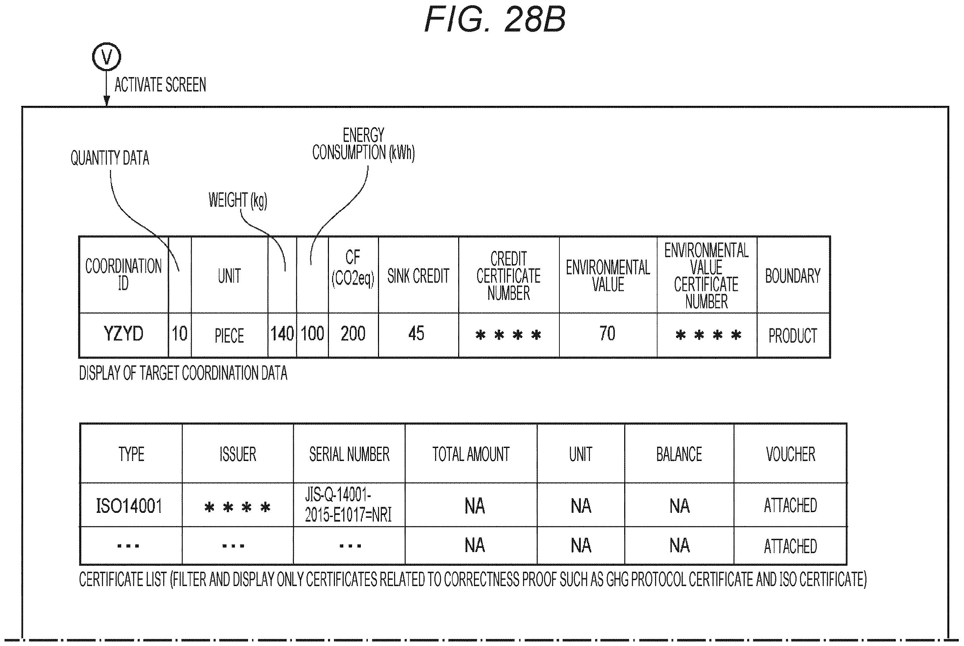

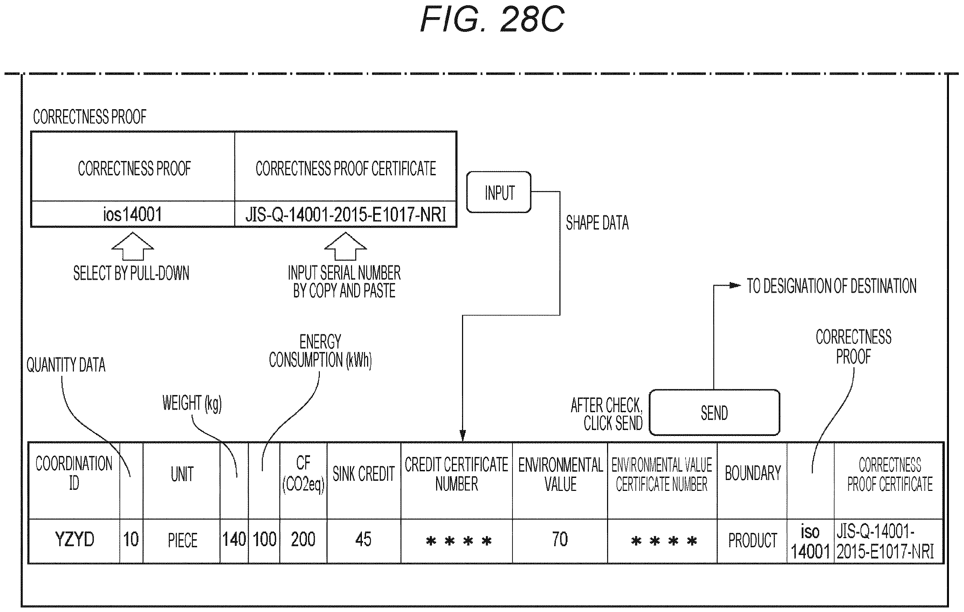

Next, correctness proof addition processing will be described with reference to Figs. 28A to 28C. When receiving a request for product shipping information from the user, the edge node 300 displays the product shipping information. When specific product shipping information is selected by the user, the edge node 300 displays the target coordination data. Furthermore, only the related certificate (correctness proof certificate) is acquired by filtering from the certificate DB and displayed.

Next, when receiving an input of the serial number of the certificate on which correctness proof is performed (among the displayed certificates), the edge node 300 associates the target of the correctness proof and the serial number of the correctness proof certificate with the target coordination data. As a result, the data related to the correctness proof can be attached to the data included in the coordination data.

Note that the correctness proof addition processing described with reference to Figs. 28A to 28C corresponds to read certificate from certificate DB, correctness proof filtering, add correctness proof 512, transmit data, and the like in the example of Figs. 5A to 5C.

As described above, in the present embodiment, an example of using the information coordination system that handles information of greenhouse gas (GHG) emissions has been described. In the present embodiment, the information coordination system can record first company activity data (for example, company activity data added in Fig. 10) generated by a first company, the first company activity data being related to GHG emissions directly emitted by the first company. In addition, the information coordination system can acquire part of second company activity data (for example, company activity data of another company illustrated in Fig. 8, and Figs. 12A and 12B) generated and recorded by another company, the second company activity data being related to GHG emissions directly emitted by another company. Furthermore, the information coordination system calculates GHG emissions (the total GHG emissions of Scope 1, Scope 2, and Scope 3 in Figs. 25A to 25C and Fig. 26) directly and indirectly emitted by the first company on the basis of the first company activity data and a part of the second company activity data. At this time, the GHG emissions directly emitted by the first company is calculated on the basis of the first company activity data, and the GHG emissions indirectly emitted by the first company is calculated on the basis of company activity data related to the first company in the second company activity data. As a result, it is possible to facilitate utilization of the company activity data of other companies in the supply chain and calculation of GHG emissions including indirect emissions.

Furthermore, in the present embodiment, the first company activity data is calculated at the product level of the first company. As a result, the calculated GHG emissions can be refined. Moreover, in the present embodiment, in order to provide company activity data at a product level, a coefficient representing a ratio of the number of parts in a product to the quantity of purchased items is used. As a result, it is possible to facilitate calculation of emissions of the upstream process of a manufactured product.

Furthermore, in the present embodiment, the first company activity data includes information of an offset applied to GHG emissions by the first company. More specifically, the first company activity data includes the GHG emissions and energy consumption other than GHG by the first company, and carbon sink credit information and environmental value information of the first company. By integrally handling not only the GHG emissions but also the offset information (such as the credit and the environmental value), it is possible to trace the total emissions record including the reduction record of the GHG emissions in the company. Note that, in the above embodiment, the case where the company activity data is recorded in the blockchain has been described as an example. However, in the embodiments described herein, the company activity data may be recorded, for example, in a database, in other manners with tamper resistance or traceability.

Furthermore, in the above embodiment, a case where a company that manufactures parts (company on the upstream side of the supply chain) and a company that manufactures a product using the parts (company on the downstream side of the supply chain) use the system has been described as an example. However, the embodiments described herein are not limited to this example. For example, a company that provides raw materials (company on the upstream side of the supply chain) and a company that manufactures a product using the raw materials (company on the downstream side of the supply chain) can also use the system. In this case, the relationship between the part and the product described above can be read as the relationship between the raw materials and the product. For example, the parts list may include raw materials of the product.

### <Input Support Function>

As described above, in the information coordination system 100, a company that manufactures parts and a company that manufactures a product using the parts register their company activity data in the blockchain. In addition, for example, the company that manufactures the product (company on the downstream side of the supply chain) uses the company activity data of the company that manufactures the parts (company on the upstream side of the supply chain). Therefore, each piece of company activity data is required to be accurate. On the other hand, the company activity data may be manually input, or may be derived from manually input data. For this reason, for example, there is a case where a numerical value with a different unit or a numerical value with a different number of digits is input or a case where the numerical value is not input in the first place due to a human error or the like. In addition, some companies lack sufficient knowledge and experience about the collection and registration of company activity data, and there may be a case where input of their own company activity data accurately is a heavy burden.

For this reason, the information coordination system 100 of the present embodiment further includes an input support function for reducing the burden of inputting the company activity data. Specifically, for example, a company that uses the company activity data (that is, company that manufactures a product on the downstream side of the supply chain) designates data necessary as the company activity data for a company that manufactures parts (company on the upstream side of the supply chain). As a result, by inputting only data required by a company that uses the company activity data among the company activity data, the company that manufactures the parts can reduce input errors of the company activity data and reduce the burden of inputting the company activity data.

Alternatively, instead of the company that manufactures the product described above, a company (simply referred to as "audit company") that audits the company's GHG emissions or calculates GHG emissions for other companies may designate data necessary for the company that manufactures the parts as the company activity data. In this case, the company that manufactures the parts inputs the company activity data in accordance with the designation of the audit company, receives verification from the audit company, and then provides the company activity data to other companies. As a result, the company that manufactures the parts can provide accurate company activity data to the company on the downstream side of the supply chain (company that manufactures the product) while reducing the burden of inputting data. Note that, as for the audit company, a department such as an environmental management department of a company that manufactures a product or parts may serve as the audit company. That is, the audit company does not need to be a separate company from the target company.

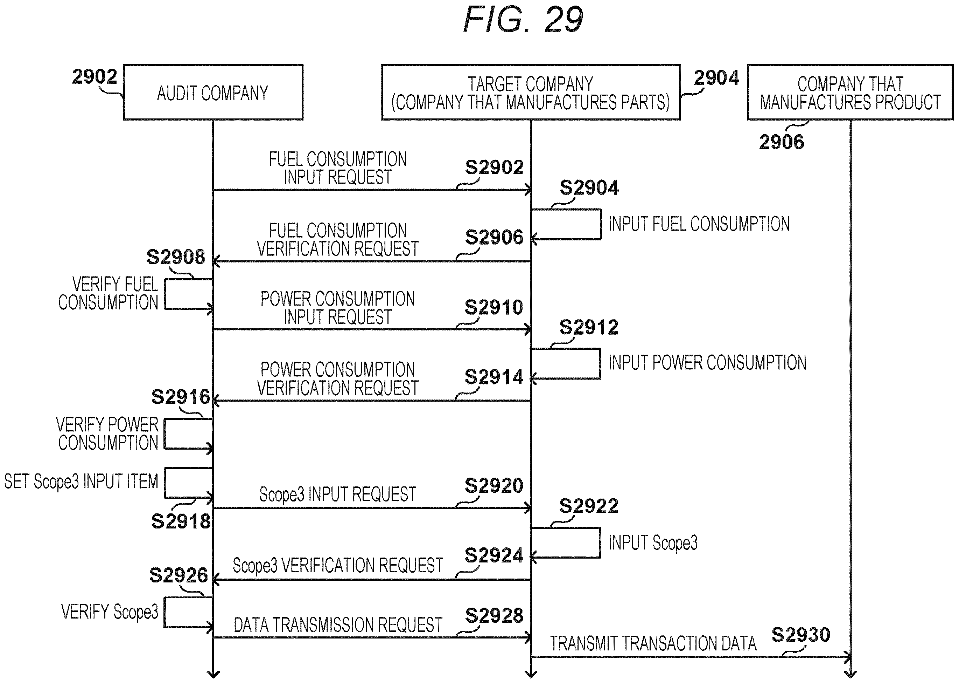

The input support function in the information coordination system 100 will be described in more detail with reference to Fig. 29. In the example illustrated in Fig. 29, a case where an audit company supports input of company activity data of a company that manufactures parts (here, also referred to as "target company" in the sense of an audit target) will be described as an example. That is, for the target company, the audit company designates necessary data among the company activity data, and verifies the input company activity data. Note that, such input support is also applicable to a case where the company that manufactures the product designates necessary data in the company activity data for the company that manufactures the parts, and uses the input company activity data.

Note that Fig. 29 schematically illustrates exchange among (user terminals 2902, 2904, and 2906 of) the audit company, the target company (company that manufactures the parts), and the company that manufactures the product so as not to complicate the drawing. However, in practice, by the user terminals of the audit company, the target company, and the company that manufactures the product exchanging data with the edge node 300, the function is implemented as if data is transmitted and received between the user terminals of the companies, similarly to the transmission and reception of transactions described above.

For example, when the user terminal 2902 of the audit company requests a display screen (for example, a fuel consumption input request screen) from the edge node 300, the edge node 300 generates display screen data and transmits the display screen data to the user terminal 2902 of the audit company. The user terminal 2902 of the audit company displays the display screen received from the edge node 300 on a display unit, and receives an input from the user. Upon receiving a user operation (for example, a fuel consumption input request) on the display screen, the user terminal 2902 of the audit company transmits a request (for example, the fuel consumption input request) whose destination is the target company to the edge node 300. On the other hand, the edge node 300 generates screen data for the user terminal 2904 of the target company and transmits the screen data (for example, displays the fuel consumption input request on a receiver screen). In this manner, the interaction between the companies illustrated in Fig. 29 is processed and implemented by the edge node 300. That is, the edge node 300 separately designates necessary data in the company activity data related to the parts manufactured by the target company and used for manufacturing the product, and transmits the data to the user terminal of the target company. Hereinafter, interactions between companies will be described, but a person skilled in the art will understand that the edge node 300 performs an operation similar to the above with each user terminal in each interaction.

Note that, since the audit company is a company that audits GHG emissions of the target company and calculates emissions for the target company, the audit company acquires in advance information indicating which part the target company delivers to a transaction partner, and stores the information in the storage medium of the user terminal 2902.

A series of sequences illustrated in Fig. 29 will be described below. First, the user terminal 2902 of the audit company transmits a fuel consumption input request to the user terminal 2904 of the target company (S2902). The fuel consumption input request is a request to designate fuel consumption data in the company activity data of the target company and to input the data by the target company. The fuel consumption data input here may be, for example, annual fuel consumption data, but the fuel consumption input request includes designation of a specific period, and may be fuel consumption data of the period.

Upon receiving the fuel consumption input request, the user terminal 2904 of the target company receives, for example, an input of fuel consumption data in the company activity data from the user of the target company (S2904). Note that the fuel consumption data corresponds to Scope 1 data of the target company. In addition, here, direct emissions in a case where the target company combusts fuel are described using the fuel consumption data as an example. However, in the present embodiment, a similar sequence can be applied to GHG direct emissions in general such as direct emissions of chlorofluorocarbons in semiconductor manufacturing, for example.

The user terminal 2904 of the target company transmits a fuel consumption verification request to the user terminal 2902 of the audit company (S2906). The fuel consumption verification request is a request to the audit company for the verification of fuel consumption data input by the target company. When the user terminal 2902 of the audit company receives the fuel consumption verification request, for example, the user of the audit company verifies the fuel consumption data included in the fuel consumption verification request. Then, the user terminal 2902 of the audit company receives an input of a verification result from the user of the audit company (S2908). If there is no problem as a result of the verification, the content input by the target company is determined. As a result of the verification, in a case where the content input by the target company includes an error, the user terminal 2902 of the audit company may transmit a fuel consumption input request including a message indicating an indicated matter to the user terminal 2904 of the target company again. Note that, in the description of Fig. 29, the case where the user of the audit company verifies the fuel consumption data included in the fuel consumption verification request has been described as an example. However, the user terminal 2902 of the audit company may verify the fuel consumption data by executing a predetermined verification program for detecting an abnormal value such as a numerical value with a different number of digits.

Next, the user terminal 2902 of the audit company transmits a power consumption input request to the user terminal 2904 of the target company (S2910). The power consumption input request is a request to designate power consumption data in the company activity data of the target company and to input the data by the target company. The power consumption data input here may be, for example, annual power consumption data, but the power consumption input request includes designation of a specific period, and may be power consumption data of the period. Note that the power consumption data corresponds to Scope 2 data of the target company. Upon receiving the power consumption input request, the user terminal 2904 of the target company receives, for example, an input of power consumption data in the company activity data from the user of the target company (S2912).

The user terminal 2904 of the target company transmits a power consumption verification request to the user terminal 2904 of the audit company (S2914). The power consumption verification request is a request to the audit company for the verification of power consumption data input by the target company. When the user terminal 2902 of the audit company receives the power consumption verification request, for example, the user of the audit company verifies the power consumption data included in the power consumption verification request. Then, the user terminal 2902 of the audit company receives an input of a verification result from the user of the audit company (S2916). If there is no problem as a result of the verification, the content input by the target company is determined. As a result of the verification, in a case where the content input by the target company includes an error, the user terminal 2902 of the audit company may transmit a power consumption input request including a message indicating an indicated matter to the user terminal 2904 of the target company again. Note that, in the description of Fig. 29, the case where the user of the audit company verifies the power consumption data included in the power consumption verification request has been described as an example. However, the user terminal 2902 of the audit company may verify the power consumption data by executing a predetermined verification program for detecting an abnormal value such as a numerical value with a different number of digits.

Furthermore, the user terminal 2902 of the audit company sets a Scope 3 input item to be input by the target company (S2918). The user terminal 2902 of the audit company transmits a Scope 3 input request to the user terminal 2904 of the target company (S2920). The Scope 3 input request is a request to designate Scope 3 data set in S2918 in the company activity data of the target company and to input the data by the target company. The Scope 3 data input here may be, for example, data aggregated over a year, but the Scope 3 input request includes designation of a specific period, and may be Scope 3 data of the period. Upon receiving the Scope 3 input request, the user terminal 2904 of the target company receives, for example, an input of Scope 3 data in the company activity data from the user of the target company (S2922).

The user terminal 2904 of the target company transmits a Scope 3 verification request to the user terminal 2904 of the audit company (S2924). The Scope 3 verification request is a request to the audit company for the verification of Scope 3 data input by the target company. When the user terminal 2902 of the audit company receives the Scope 3 verification request, for example, the user of the audit company verifies the Scope 3 data included in the Scope 3 verification request. Then, the user terminal 2902 of the audit company receives an input of a verification result from the user of the audit company (S2926). If there is no problem as a result of the verification, the content input by the target company is determined. As a result of the verification, in a case where the content input by the target company includes an error, the user terminal 2902 of the audit company may transmit a Scope 3 input request including a message indicating an indicated matter to the user terminal 2904 of the target company again. Note that, in the description of Fig. 29, the case where the user of the audit company verifies the Scope 3 data included in the Scope 3 verification request has been described as an example. However, the user terminal 2902 of the audit company may verify the Scope 3 data by executing a predetermined verification program for detecting an abnormal value such as a numerical value with a different number of digits. As described above, by the user terminal 2902 of the audit company separately requesting the user terminal 2904 of the target company to input, for example, Scope 1 to 3 information in the company activity data, the target company can input the company activity data in a step-by-step manner, and the burden of inputting the company activity data can be reduced. In addition, since the data input by the target company is verified by the audit company in each case, the accuracy of the company activity data can be ensured. In other words, by the edge node 300 transmitting and receiving the input request and the verification request described above to and from each user terminal, for example, it is possible to implement exchange of requests between the user terminal 2902 of the audit company and the user terminal 2904 of the target company, and to implement promotion of input of company activity data and accumulation of accurate company activity data.

Furthermore, in a case where it is determined that there is no problem in the Scope 3 data input by the target company, the user terminal 2902 of the audit company transmits a data transmission request to the user terminal 2904 of the target company (S2928). The data transmission request is a request to the target company for transmission of company activity data of the parts as transaction data to the user terminal 2906 of the company that manufactures the product.

In response to receiving the data transmission request or receiving a user operation after receiving the data transmission request, the user terminal 2904 of the target company transmits company activity data (transaction data related to the parts) including the verified Scope 1 to 3 data to the user terminal 2906 of the company that manufactures the product (S2930). At this time, the following processing is performed (for example, by the edge node 300) in order for the user terminal 2904 of the target company to transmit the transaction data. The edge node 300 proportionally divides the sum of energy consumption and GHG emissions related to Scope 1 and 2 at the ratio between the sales of the target company for the transmission destination company (that is, the company that manufactures the product) and the annual sales of the target company, and adds the result as one element of the transaction data. In addition, the edge node 300 calculates each of input values for Scope 3 input items designated (in S2918) on an intensity basis, and calculates GHG emissions of each input value. Furthermore, the edge node 300 sets the sum of the calculated values as the energy consumption or GHG emissions in the transaction data. The transaction data including such calculated values is stored in the blockchain via the edge node 300 as described above, and the stored data is read from the blockchain, so that the transaction data is implemented as if the transaction data is transmitted and received. In the above calculation example, the ratio is calculated using the sales, but instead of this, the ratio may be calculated by the total production volume and the production volume to be delivered in the target company (or a factory, a line, or the like), or the production activity time and the production activity time related to a product to be delivered in the target company.

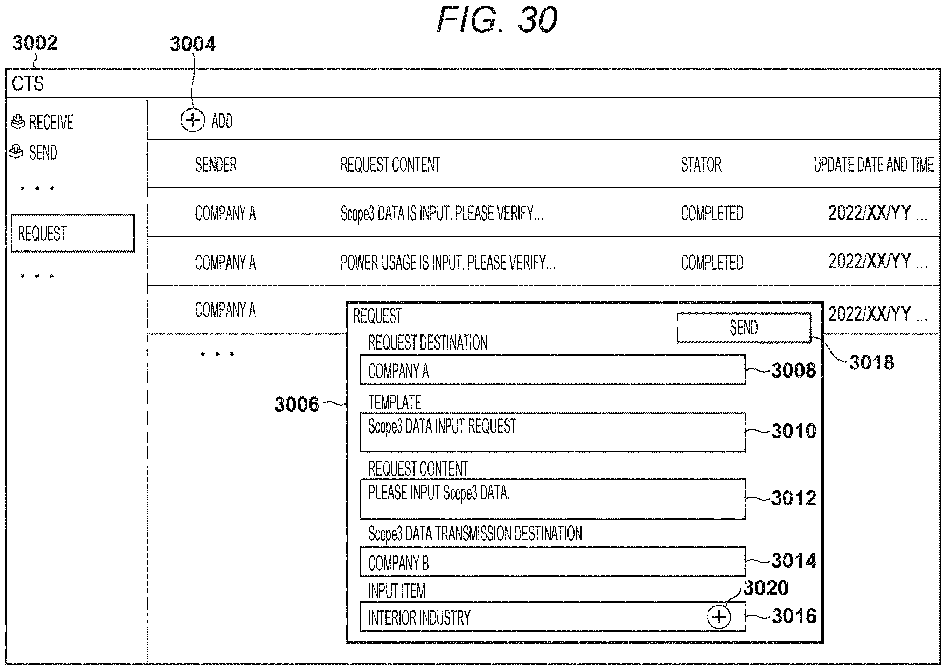

For example, a request screen displayed by the user terminal 2902 of the audit company will be described with reference to Fig. 30. Fig. 30 illustrates a state where a request dialog 3006 is displayed when an add button 3004 is pressed on a request list screen 3002 that displays a list of requests to be transmitted to and received from other companies. In the example of Fig. 30, on the request list screen 3002, for example, a fuel consumption verification request, a power consumption verification request, a Scope 3 data input request, and the like transmitted from the target company in the past are displayed as a list. The request dialog 3006 includes a request destination 3008, a request template 3010, a request content 3012, a Scope 3 data transmission destination 3014, an input item 3016, and a send button 3018.

For example, the target company is set as the request destination 3008. For example, a fuel consumption input request, a power consumption input request, or a Scope 3 input request can be set in the request template 3010. Any text can be input in the request content 3012, and for example, a text indicating a request matter and an explanation thereof from the audit company to the target company can be input. The Scope 3 data transmission destination 3014 indicates a transmission destination of input data. In the above example, since data to be input is transmitted to the company that manufactures the product (company on the downstream side of the supply chain), for example, a name of the company is input. In the input item 3016, an item of the input item or a group name is input. When an item addition button 3020 is pressed, an item to be input as a Scope 3 input item can be added. For example, items such as "polyester", "acrylic", "cotton", and "hemp" can be set in an "interior industry" group. In setting the item, a category, a unit, an intensity, and the like associated with the item can be designated for each item. For example, a category "3.1 purchased articles/services" can be designated for the item name "polyester", and an index used when the target company inputs data of each item, such as "sheet" as a unit and "0.003" as an intensity, can be set. These enable the target company to more accurately input data desired by a company that views and uses the data.

When the send button 3018 is pressed by a user operation, the dialog is closed, and the Scope 3 input request is transmitted to the user terminal 2904 of the target company. Note that the request screen and dialogue displayed by the user terminal 2902 of the audit company are implemented by, as described above, transmitting a request to generate a screen from the user terminal 2902 of the audit company to the edge server 300, and the edge server 300 generating data of the display screen and transmitting the data to the user terminal 2902.

Note that, in the example of the request screen illustrated in Fig. 30, the case of transmitting the Scope 3 input request has been described as an example, but this example can also be used for the fuel consumption input request and the power consumption input request. For example, the fuel consumption input request or the power consumption input request may be set in the request template 3010 of the request dialog. The input item 3016 described above has been described by taking the item associated with Scope 3 as an example, but based on a template to be set (fuel consumption input request, power consumption input request, or Scope 3 input request), items associated with each template can be input for the input item.

### <Parts Information Sharing Function>

In the above embodiment, for example, as the description related to Fig. 15, the processing in which the edge node 300 generates transaction data of a product using a bill of materials has been described. The present embodiment further includes a function of sharing configuration information of a specific part in the bill of materials with other companies or other departments. The shared part can be displayed as configuration information of a part of one's own company or one's own department at a supply destination, and company activity data of the part can be input and transmitted as transaction data.

Note that, in the description of the parts information sharing function, sharing the configuration information between the company that manufactures the product and the company that manufactures the parts is described as exchange between the user terminals of these companies in order to simplify the description. However, in practice, by the user terminals of the company that manufactures parts and the company that manufactures a product exchanging data with the edge node 300, the function is implemented as if the configuration information is shared between the user terminals of the companies.

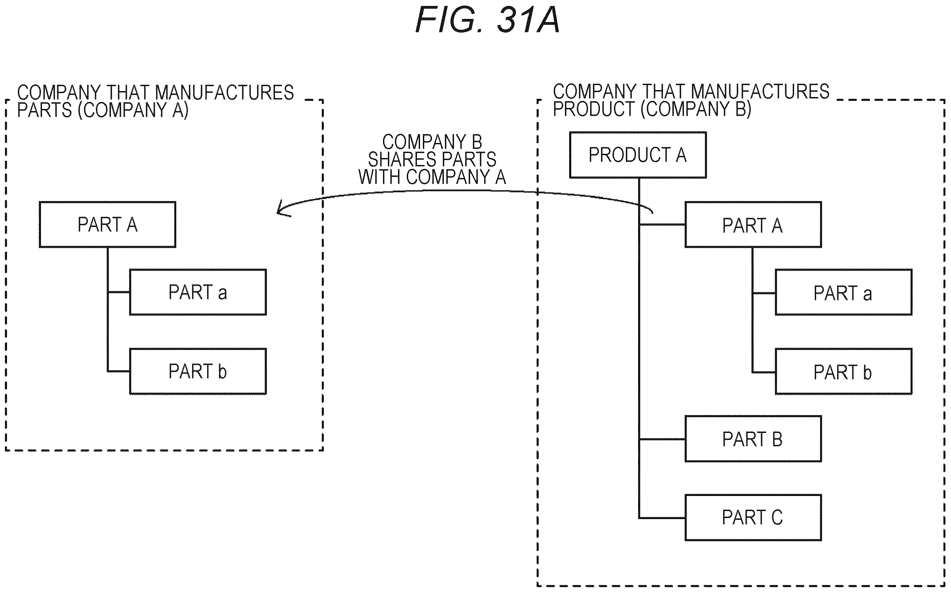

By using the parts information sharing function, for example, as illustrated in Fig. 31A, a company (B) that manufactures a product can share parts with a company (A) that manufactures parts. For example, it is assumed that the bill of materials of the company (company B) that manufactures the product includes configuration information of "part a" and "part b" constituting "part A". For example, in a case where the company B that manufactures the product shares the information of the "part A" with the company A that manufactures the parts, the "part A" and the "part a" and "part b" constituting the "part A" are shared with the company A. In a state where the parts are shared, for the "part A" that is a shared part, the company A that manufactures the parts calculates and inputs company activity data related to the "part A", and the "part a" and "part b" constituting the "part A", and transmits the data to the company B that manufactures the product. Then, the input data related to the "part A", and the "part a" and "part b" is transmitted to the company B, and the parts information of the company B is updated. The edge node 300 executes control in a manner that the company B cannot directly edit the data related the "part A", and the "part a" and "part b" (handled by read-only authority) in principle, but enables input of specific items such as a shipping ratio, a transaction amount, and a transaction quantity.

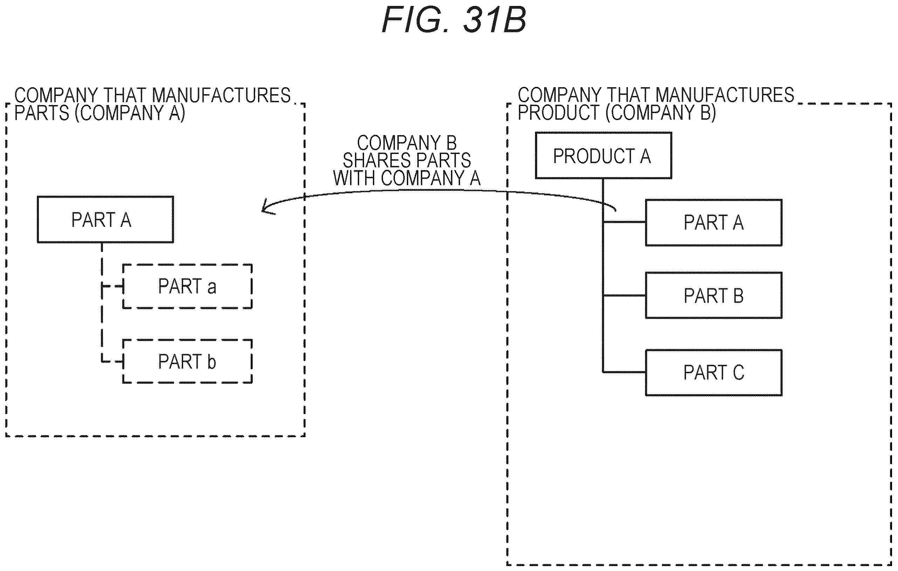

In addition, Fig. 31B illustrates another example in which the company (company B) that manufactures the product shares parts with the company (company A) that manufactures the parts. The company that manufactures the product (company B) can share information of the "part A", which is a part to be shared, with the company that manufactures the parts (company A). The company A that manufactures the part A can newly add information of the "part a" and "part b" constituting the "part A", and calculate and input company activity data related to the added parts. However, the company (company B) that manufactures the product does not have the configuration information of the part A. Therefore, the information of the "part a" and "part b" is not shared with the company (company B) that manufactures the product, and the overall information of the part A is transmitted to the company B that manufactures the product. As a result, even in a case where the parts constituting the part A are not desired to be known (not desired to be shared) by other companies, the information of the part A can be shared with the company that manufactures the product.

The sharing of the parts information described above is set using the user interface described below, but the processing of sharing the parts information is performed in the edge node 300. That is, in response to a sharing request from the user terminal 2904, the edge node 300 causes two companies to share the parts information by, for example, transferring the information of the corresponding part of the bill of materials. On the other hand, in a case where the company that manufactures the product does not have the configuration information of the parts as illustrated in Fig. 31B, the edge node 300 controls the sharing of the parts information in a manner that the parts information ("part a" and "part b") added by the company that manufactures the parts is not shared with the company that manufactures the product.

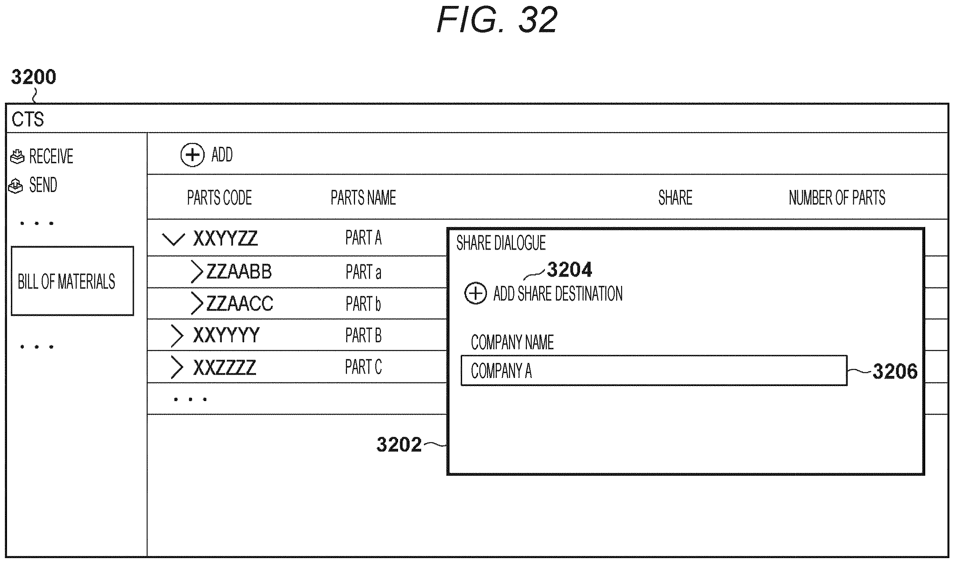

Next, a user interface for sharing parts information will be described with reference to Fig. 32. Note that, in the example illustrated in Fig. 32, when a user terminal of a company that manufactures a product displays a user interface 3200 indicating a parts configuration, for example, a share dialog 3202 is displayed in response to pressing of a share button (not illustrated). That is, in response to pressing of the share button in the user terminal, the edge node 300 generates screen information including the share dialog 3202 and transmits the screen information to the user terminal. The share dialog 3202 includes a user interface for adding a company name as a share destination of the parts information. When an add share destination button 3204 is pressed, the edge node 300 makes it possible to search for a company name or a company code, and searches for the company name or the company code on the basis of the input text or the like. When a specific company name or company code is selected from the search results, the edge node 300 displays the selected company name or the like on a company name display 3206 of the share dialog 3202. At this time, in response to the selection of a specific company name or company code, the edge node 300 shares the parts information to be shared with the selected company.

By using such a parts information sharing function, for example, the company on the upstream side of the supply chain that does not have a complete or sufficient parts list (for example, a small and medium-sized enterprise) can refer to a relevant part of the parts list owned by the company on the downstream side of the supply chain. That is, the upstream company can display part of the parts information of the downstream company as if it is a parts list of the upstream company. In addition, since the company on the downstream side of the supply chain can prompt the upstream company to input specific information (that is, information of parts to be shared), it is possible to reduce a situation in which data has not been input when the downstream company desires to use the company activity data of the upstream company and to acquire necessary data more reliably. As a result, it is possible to reduce input errors of the company activity data and the burden of inputting the company activity data.

The present invention is not limited to the above embodiments, and various changes and modifications can be made without departing from the spirit and scope of the present invention. Therefore, in order to make the scope of the present invention public, the following claims are attached.

The present application claims priority based on Japanese Patent Application No. 2021-191405 filed on November 25, 2021, the entire contents of which are incorporated herein by reference.

### Reference Signs List

- 120: Blockchain network
- 300: Edge node
- 320: Blockchain node
- 350: User terminal

## Claims

1. One or more programs for causing a computer to function as each unit of an information coordination system for handling information of greenhouse gas (GHG) emissions, the information coordination system including:
a recording unit that records, in a storage, first company activity data that is generated by a first company and relates to GHG emissions directly emitted by the first company;
an acquisition unit that acquires a part of second company activity data that is generated by another company, recorded in the storage, and relates to GHG emissions directly emitted by the another company; and
a calculation unit that calculates, on a basis of the first company activity data and a part of the second company activity data, GHG emissions directly and indirectly emitted by the first company, wherein
the calculation unit calculates GHG emissions directly emitted by the first company on a basis of the first company activity data, and calculates GHG emissions indirectly emitted by the first company on a basis of company activity data related to the first company in the second company activity data.

2. The program according to claim 1, wherein company activity data generated by the first company includes GHG emissions emitted by the first company for a product of the first company, and the second company activity data includes GHG emissions emitted by the another company for a part or a raw material used to manufacture the product.

3. The program according to claim 2, wherein GHG emissions indirectly emitted by the first company are calculated using a coefficient indicating a relationship between a number of parts purchased by the first company and a number of the parts necessary for a product of the first company.

4. The program according to any one of claims 1 to 3, wherein the first company activity data includes information of an offset applied to GHG emissions directly emitted by the first company.

5. The program according to any one of claims 1 to 4, wherein the first company activity data includes GHG emissions and energy consumption other than GHG by the first company, and information of a carbon sink credit and information of an environmental value of the first company.

6. The program according to any one of claims 1 to 5, wherein the storage includes a blockchain or a tamper-resistant database in which the first company activity data and the second company activity data are recorded.

7. The program according to any one of claims 1 to 6, wherein the information coordination system further includes a support unit that supports input of the second company activity data, and
the support unit designates necessary data in company activity data provided by the another company and relates to a part or a raw material used for manufacturing a product of the first company, and transmits the data designated to a user terminal of the another company.

8. The program according to claim 7, wherein the support unit receives designation of the necessary data by the first company.

9. The program according to claim 7 or 8, wherein when receiving designation of the necessary data in company activity data, the support unit further sets an index used when the another company inputs data related to the designation.

10. The program according to any one of claims 1 to 9, wherein the information coordination system further includes a share unit that shares configuration information of a part or a raw material used for manufacturing a product of the first company with another company that manufactures the part or the raw material.

11. An information coordination system for handling information of greenhouse gas (GHG) emissions, the information coordination system comprising:
a recording unit that records, in a storage, first company activity data that is generated by a first company and relates to GHG emissions directly emitted by the first company;
an acquisition unit that acquires a part of second company activity data that is generated by another company, recorded in the storage, and relates to GHG emissions directly emitted by the another company; and
a calculation unit that calculates, on a basis of the first company activity data and a part of the second company activity data, GHG emissions directly and indirectly emitted by the first company, wherein
the calculation unit calculates GHG emissions directly emitted by the first company on a basis of the first company activity data, and calculates GHG emissions indirectly emitted by the first company on a basis of company activity data related to the first company in the second company activity data.

12. An information processing apparatus constituting an information coordination system for handling information of greenhouse gas (GHG) emissions, the information processing apparatus comprising:
a unit to record, in a storage, first company activity data that is generated by a first company and relates to GHG emissions directly emitted by the first company;
a unit to acquire a part of second company activity data that is generated by another company, recorded in the storage, and relates to GHG emissions directly emitted by the another company; and
a unit to calculate, on a basis of the first company activity data and a part of the second company activity data, GHG emissions directly and indirectly emitted by the first company, wherein
the unit to calculate calculates GHG emissions directly emitted by the first company on a basis of the first company activity data, and calculates GHG emissions indirectly emitted by the first company on a basis of company activity data related to the first company in the second company activity data.
